# EUROPEAN PATENT SPECIFICATION

(11) **EP 4 536 918 B1**
(45) Date of publication and mention of the grant of the patent: **05.08.2026**
(21) Application number: 24737333.5
(22) Date of filing: 14.06.2024
(51) Int. Cl.: E04F 13/08

(54) **A SET OF PARTS COMPRISING A PANEL FITTING AND SLAT WALL PANEL, AND USE OF SUCH SET OF PARTS**
BAUTEILESATZ MIT EINEM PLATTENBESCHLAG UND LAMELLENWANDPLATTE SOWIE VERWENDUNG SOLCH EINES BAUTEILESATZES
ENSEMBLE DE PIÈCES COMPRENANT UN MOYEN DE FIXATION ET UN PANNEAU DE PAROI À LATTES, ET UTILISATION D'UN TEL ENSEMBLE

(30) Priority: 16.06.2023 DK PA202370301; 23.01.2024 DK PA202470017
(43) Date of publication of application: 16.04.2025
(60) Divisional application: 25201988.0
(73) Proprietor: Sonne, Martin, 2950 Vedbæk (DK)
(72) Inventor: Sonne, Martin, 2950 Vedbæk (DK)
(74) Representative: AWA Denmark A/S
(86) International application number: PCT/DK2024/050144
(87) International publication number: WO 2024/255982

(56) References cited:
- EP-A1- 0 360 001
- EP-B1- 2 275 613
- CN-A- 107 905 478
- CN-A- 112 554 479
- GB-A- 2 164 837
- KR-A- 20220 113 127
- HANS KNOT: "haken für akustikpaneele", 29 December 2023 (2023-12-29), XP093334963, Retrieved from the Internet <URL:https://www.youtube.com/watch?v=N0rAGLU0zoY> [retrieved on 20251031]

## Description

### Technical Field

The present disclosure relates to a set of parts for mounting an accessory on a slat wall panel, wherein the set of parts comprises the slat wall panel and a panel fitting. Additionally, the disclosure relates to a panel fitting and a set of parts comprising at least a first panel fitting, a second panel fitting and an installation tool. The disclosure further relates to use of a panel fitting.

### Background Art

Decoration of walls is essential when furnishing a room. For this purpose, so-called slat wall panels have become popular due to their minimalistic appearance and acoustic features. A slat wall panel is an arrangement that can be installed on a wall or in a ceiling in a home, office or boutique, and it can help to break up the room by creating a feature wall or help to reduce sound reverberation in noisy areas of the room. The slat wall panel is decorative in itself, however it is also possible to decorate the slat wall panel with different items, such as pictures, mirrors, hangers, or the like. These items are usually installed on the slat wall panel by drilling a hole in the slat wall panel or by the use of nails or glue, which leaves a mark on the slat wall panel. For this reason, redecoration of the slat panel wall most likely results in uncovered holes or other damages to the slats, which is highly undesired. Fixing the damage to the slats is expensive, insufficient and/or inconvenient.

Walls not comprising slat wall panels, but where fittings are used for the attachment of wall panels are know from CN112554479A, CN107905478A, EP2275613B1 and EP0360001A1.

Walls not comprising slat wall panels, but where fittings are used for the attachment of wall panels are know from CN112554479A, CN107905478A, EP2275613B1 and EP0360001A1.

GB2164837A1 discloses a set of parts according to the introductory part of claim 1.

A prior web page discloses prior art acoustic panels denoted WoodUpp^{™} Akupanel, which comprise felt made from recycled plastic bottles and wooden slats. The felt absorbs sound waves and dampens the sound.

Another prior web page shows a picture of a hook mounted on a rib wall. According to the web page, the hook is for horizontally (lying) mounted rib panels. The hook appears to be a plate-shaped longitudinal member that appears to be bent in four rectangular angles to form the hook. In the picture, an end part of the hook appears to be positioned between two horizontally extending ribs of a rib wall.

### Summary

With this background, it is therefore an object of the present disclosure to provide an accessory mounting that solves or at least alleviates one or more of the above problems.

### First aspect

According to a first aspect of the present disclosure, this object may be achieved by a set of parts according to claim 1.

The accessory and the attachment element may be comprised in an accessory carrier.

Potential advantages of the set of parts of the present disclosure include mounting of accessories on the slat wall panel of the set of parts without damaging the slats, the support plate, or the surface on which the slat panel is attached. This is achieved by each attachment wing engaging with the track formed in the slat wall panel thereby providing a secure engagement between the panel fitting and the slat wall panel. Another advantage is that the set of parts provides a system, wherein a panel fitting can be easily mounted on the slat wall panel, allowing easy and accessible redecoration of the slat wall panel with limited effort. The panel fitting is mounted to the slat wall panel by inserting the panel fitting between the slats and guiding each attachment wing into the track. Similarly, the panel fitting may be dismounted by guiding each attachment wing out of the track and remove the panel fitting from the slat wall panel. In this way, the panel fitting can be easily attached to and removed from the slat wall panel by a single movement of the panel fitting while still providing a secure mount when the panel fitting is mounted.

Another advantage is that the panel fitting can be mounted to the slat wall panel without the need of electrical tools such as screwdrivers and drills. The simple movement required to guide each attachment wing so that it engages with the track formed in the slat wall panel does not require any tools. The panel fitting may be installed by inserting the panel fitting between the slats and guiding each attachment wing into the track only using hands.

The slat wall panel may comprise more than two slats, such as 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, or 50 slats. The slat wall panel may contain more than 50 slats.

The at least first and second slats are arranged on the support plate. In these embodiments the slats and support plate are separate parts arranged on a front surface of the support plate.

The slats are arranged on the front surface of the support plate. The front surface of the support plate is adapted to face away from a surface of a building on which the support plate is attached. When the slat wall panel is mounted on an interior wall, the front surface is adapted to face the room in which it is mounted.

The slats may be arranged on the support plate without direct contact with each other.

Each slat of the slat wall panel may be elongated in shape and extend in parallel with each other along the longitudinal direction. The slats may be substantially identical to each other.

The slats may be made from a material such as wood, composite wood, a polymer such as PVC, a metal, or a combination thereof.

Generally, each slat may be fastened or attached to the support plate.

The fastening or attachment may be by means of nails, rivets, screws, staples, and/or glue.

Preferably, each slat has a slat back fastened to the support plate.

Preferably, each slat back is partly fastened to the support plate leaving at least one section of each slat back partly free from, i.e. unattached to the support plate. At least one section of each slat back may be left unattached to the support plate, such that at least one section of the slat back is connected to the support plate while at least one other section is free and can move in relation to the support plate. In this way the track formed in the slat wall panel may be formed between the slats and the support plate by the at least one section unattached to the support plate.

The track formed in the slat wall panel for engaging with the attachment wing of the panel fitting may be formed non-destructively i.e. without permanently damaging the slat wall panel and/or panel fitting. Damage in this sense may be functional and/or aesthetic damage, such as carving into at least one of the slats. The track may be formed non-destructively by the attachment wing elastically compressing the support plate when the attachment wing engages with the track.

Each slat may be partly fastened by being stapled to the support plate.

Each slat may be fastened to the support plate only by staples. By fastening each slat to the support plate only by staples a secure attachment is achieved which is also cheap and fast to produce.

At least one staple may be rotated relative to at least one other stable, such as being rotate in the range of 10 to 90 degrees relative to the at least one other staple. This has the potential advantage of providing a better attachment between the slat and the support plate.

Each slat may be stapled to the support plate with staples placed at a staple distance in the range of 5 to 30 cm, more preferably in the range of 10 to 15 cm.

The staple distance may vary along the length of each slat and/or between slats. Alternatively and/or additionally, the slat back is partially glued to the support plate.

Staples attaching a slat to the support plate may be arranged along a substantially straight line, such as a straight line in the longitudinal direction. The staples may additionally and/or alternatively be arranged along a single row, or two rows, or three rows in the longitudinal direction. Alternatively, the stables may be arranged in a zigzag pattern along the longitudinal direction.

Arranging the staples in a zigzag pattern may provide an improved attachment to the support plate especially when the slats are arranged with the longitudinal direction extending horizontally.

Two neighbouring slats may each be fastened to the support plate with staples. The staples attaching the two neighbouring slats to the support plate may be arranged in a zigzag pattern in the longitudinal direction.

This has the potential advantage of providing more space for attaching panel fittings or similar items.

The majority of the slat back of at least one of the slats may be glued to the support plate with a minority of the slat back not glued to the support plate. The slat back may alternatively be completely fixed to the support plate. In such embodiments, a track is comprised in at least one of the first and second slats, such that the panel fitting can be attached to the slat wall panel non-destructively.

Each slat may generally comprise a slat front.

The slat front may be substantially rectangular in shape.

The slat front may be adapted to face away from the wall onto which the slat wall panel is mounted.

The slat front may have a width in the range of 0.5 to 10 cm, preferably in the range of 1 to 6 cm, more preferably in the range of 2 to 3 cm. A slat having a width larger than 10 cm may be conceived. 1 to 4 cm, preferably in the range of 2 to 3 cm.

The distance between the slat back and the slat front defines a slat thickness, also referred to as a slat depth extending in a depth direction. Generally, the at least two slats may be of the same thickness.

All slats comprised in the slat wall panel may have substantially the same thickness.

The slat thickness may be in the range of 0.5 to 3 cm, preferably in the range of 1 to 1.5 cm.

Preferably, each slat further comprises two slat sides extending between the slat front and the slat back.

Each slat side may extend substantially perpendicular to the slat front. Alternatively, at least one of the slat sides extends from the slat front at an acute angle or an obtuse angle.

Each of the slat front, the slat back, and the two slat sides provides a slat surface.

The slat may comprise a veneer material, preferably on the slat front surface.

At least one of the slats may have a rectangular, square, or trapezoid cross section.

At least one of the slat sides may be rounded.

At least one of the slats may have a triangular cross section. In these alternative embodiments, the slat has three sides wherein one side forms the slat front facing away from the support plate, and the two remaining sides faces the support plate. In these embodiments, the slat thickness is defined as the distance between the slat front and a corner of the triangular cross section opposite the slat front.

In embodiments where at least one slat has a slat side extending at an acute angle from the slat front, the track may be formed in a triangular space between the slat and support plate.

In embodiments where at least one slat has a rounded slat side the track may be formed between the space formed between the slat and support plate.

In embodiments, where a track is formed in at least one of the first and second slats, the track is preferably formed in one of the slat sides.

A track may be formed in both slat sides.

The track may be formed between the slat front and the slat back. Alternatively, the track may be formed at a corner between the slat back and a slat side.

The at least two slats may be arranged on the support plate with a mutual slat distance leaving an oblong spacing between slats. The slat distance is interchangeably referred to as the width of the oblong spacing.

The at least two slats may be arranged to extend in parallel on the support plate with a slat side of a first slat facing a slat side of a second slat. The oblong spacing between two slats reveals a part of the support plate, thereby giving the slat wall panel a striped appearance alternating between slat and support plate.

The slat distance may be in the range of 0.5 to 4 cm, preferably in the range of 1 to 3 cm, more preferred in the range of 1 to 2 cm.

The oblong spacing may be defined by two directly opposing and facing slat sides and a part of the support plate, said part extending between the two directly opposing and facing slat sides.

The oblong spacing may extend between two ends in the longitudinal direction of the slats.

The oblong spacing may extend the entire length of the slats.

In some embodiment, the slats are only in indirect contact with each through the support plate.

The oblong spacing may have an open end in at least one of the ends, preferably both ends.

Each slat may have substantially the same cross-section along the longitudinal direction.

The support plate is made of a compliant, i.e. flexible and/or resilient, material.

The support plate may be made of woven or non-woven textile fibres.

The support plate may be made of a felt material. The felt material may be made of a plastic polymer.

Having a support plate of felt may have the advantage of providing soundproofing effects. It further may have the advantage of being a compliant material in which an attachment wing can non-destructively form a track. Alternatively and/or additionally, the support plate may be made from a wood material, such as a soft wood material. The term "compliant" is in this sense to be understood as a compressible material, such as capable of being compressed in the range of 20% to 90% be means of manual compression.

When the support plate is made of a resilient material, the support plate may deform elastically when an attachment wing forms the track.

The support plate may return substantially to the same shape and/or condition when the panel fitting is removed.

The slat wall panel may comprise slats partly fastened to the support plate and a support plate that elastically deforms when an attachment wing forms the track.

The support plate may be elastically compressed in the range of 20% to 90% in a direction perpendicular to the length direction of the slats.

The support plate may be 10% compressed with a pressure of 5 - 500 kPa.

The compressive strength of the support plate according to ASTM D575 may be less than 1 MPa, preferably less than 500 kPa. In this way, the support plate is easily compressed non-destructively when forming a track between the slat and the support plate.

The support plate may have a hardness less than that of the slats, such that a track can be non-destructively formed.

The support plate may be made of a material with a Young's modulus according to ASTM D636 of less than 1 GPa, preferably less than 0.8 GPa, more preferably less than 0.7 GPa. In preferred embodiments, the Young's modulus of the support plate is smaller than the Young's modulus of the slats.

The support plate may comprise and/or be made of a material with a shore 00 hardness according to ASTM D2240 within a range of 5 to 50.

Forming the track between the slat and the compliant or resilient support plate is especially advantageous because it allows the slat panel of the set of parts to have a non-visible track between the slat and the support plate which is only formed when the panel fitting is attached.

The track is formed between the support plate and one of the first and second slats, and the track is formed when the attachment wing engages with the track and/or when the wing is introduced between the support plate and the slat.

The front surface of the support plate may be a substantially planar surface abutting a substantially planar slat back. Planar in this context is to be understood as in that the front surface is a flat surface without grooves, recesses or openings apart. In this context smaller irregularities in the material of the slat, such as those formed by the wood grains in a slat made from wood, are not considered as constituting grooves, recesses or openings.

The track between the support plate and slat may have an extent of 0 mm or more in the depth direction between the support plate and slat when the panel fitting does not engage with the track.

The extent of the track in the depth direction between the support plate and slat may increase when the attachment wing engages with the track.

The increased extent of the track between the slat and the support plate may be configured to occur only in proximity of where the panel fitting is attached.

The increased extent of the track in the depth direction may be provided by displacement and/or compression of the support plate material.

The attachment wing may displace the support material, such as in the depth direction, when guiding the attachment wing such that the attachment wing engages with the track. This has the potential advantage that the slat wall panel may be provided with no visible track and a visible track is only formed when the panel fitting is attached to the slat wall panel.

In embodiments where the support plate comprises or is of a weatherproof material such as for a slat wall panel for outside use, the support plate may be made of a material such as metal, wood, concrete, or brick. A support plate made of metal or wood may be a framing with the at least two slats fastened to the metal or wood frame. The support plate may comprise a plurality of beams extending on the surface of the building, such as beams extending transversely relative to the oblong opening.

In such embodiments, the panel fitting may not be adapted to form a track between the support plate and the slat, which is not covered by the attached claims, because the slat back is not completely abutting the support plate and because the support plate is of a non-compliant material. In such embodiments, the panel fitting may be attached to the slat wall panel by engaging with a track formed in the at least one slat.

The panel fitting of the set of parts can be attached to the slat wall panel by inserting the panel fitting in between the first and second slats. The panel fitting comprises two attachment wings for attaching the panel fitting between the first and second slats.

The panel fitting may be attached to the slat wall panel by guiding the attachment wing such that the attachment wing engages with the track of the slat wall panel. "Guiding" is in this context to be understood as in that the panel fitting can first be inserted between the slats, and the attachment wing can be displaced such that it, or a part thereof, moves from being in the oblong opening to being in the track of the slat wall panel.

"Guiding" can be a rotation and/or translational movement of the attachment wing into the track, such that the attachment wing is positioned in the track of the slat wall panel
The panel fitting has a fitting height extending in a height direction. The height direction is parallel to the depth direction when the panel fitting is mounted on the slat wall panel.

The panel fitting may comprise a stem.

The stem may be configured to extend in the depth direction when the panel fitting is attached to the slat wall panel.

In presently preferred embodiments, at least one attachment wing is connected to and protrudes laterally or sidewards from the stem.

The stem has a stem height extending in a stem height direction.

The stem height is interchangeably referred to as a stem length and the stem height direction is interchangeably referred to as the stem length direction.

The stem height may be greater than the slat thickness. In these embodiments, the stem of the panel fitting extends beyond the front side of the slat fronts in the height direction when the panel fitting is inserted between the slats. This has the potential advantage of providing a panel fitting that is easy to insert between the slats.

The height of the stem extending beyond the protruding attachment wing may be shorter than the slat thickness. In these embodiments, the slat front extends beyond the stem of the panel fitting in the height direction when the attachment wing is engaging with the track. This has the potential advantage that the panel fitting can frictionally engage with the slat by clamping the slat between the attachment wing and an element attached to the stem such as an accessory screwed to the stem.

The stem height may alternatively be shorter than the slat thickness i.e. the stem may have a stem height that is shorter than the slat thickness.

The stem length may be in the range of 0.5 to 5 cm, 0.5 to 4 cm, 0.5 to 3 cm, 1 to 3 cm, 1 to 2 cm, more preferably substantially 1.5 cm.

The panel fitting may comprise a bending part. The bending part has the potential advantage of decreasing a dimension of the panel fitting when the bending part is bent, such as a width of the panel fitting, wherein the width is perpendicular to the length direction or height of the stem.

By bending the panel fitting prior to insertion in the slat wall panel and inserting the panel fitting into between the first and second slats, the attachment wing may engage with the track when the panel fitting returns to an unbent state.

The attachment wing may be guided such that the attachment wing engages with the track by means of the bending part comprised in the panel fitting.

The bending part may be a hinge connection and/or an elastic part.

The bending part may be comprised in the attachment element, the accessory, and/or the stem.

The stem may be substantially U-shaped.

The stem may be formed from a metal sheet.

The U-shape may be characterized by two arms extending from each end of a bottom section. The two arms may extend substantially parallel with each other in an unbent state.

The bottom section may be substantially linear or curved.

At least one attachment wing may extend from one of the arms of the U-shape.

An attachment wing may extend from each of the arms of the U-shape.

The bottom section of the U-shape may comprise or form the bending section.

The bottom section of the U-shape may extend in the length direction of the stem length i.e. in the depth direction of the slats when attached to the slat wall panel. Alternatively, the bottom section of the U-shape may extend substantially in parallel with support plat when the panel fitting is attached to the slat wall panel.

The attachment element and/or accessory i.e. the accessory carrier may be inserted in the U-shape, such as between the arms of the U-shape.

The attachment element and/or accessory i.e. the accessory carrier may inhibit the bending section from bending when inserted in the U-shape. This has the potential advantage of providing a more secure attachment of the panel fitting to the slat wall panel by inhibiting accidental bending of the bending part when the panel fitting is attached to the slat wall panel.

In embodiments where the bending is in the form of an elastic material, the panel fitting may be attached to the slat wall panel by applying a force to bend the panel fitting, inserting the panel fitting in the slat wall panel and releasing the force such that the elastic material returns to an unbent state guiding the attachment wing into the track.

The bending section may be made from a material such as a plastic polymer or metal.

The bending section may be formed from a metal sheet.

The attachment wing may be guided into the track by rotating the part of the panel fitting comprising the attachment wing, such that the wing engages with the track of the slat wall panel.

The attachment wing and the stem may be integrally formed and/or formed in one piece. This has the potential advantage that the panel fitting is easy to manufacture and that the attachment wing is rotated by rotation of the stem. Alternatively, the stem and the attachment wing may be formed separately from each other and attached to each other, i.e. they are non-integral or in two pieces.

The stem may have a hole extending through the stem.

The attachment wing may be integrally formed with an attachment element such as a threaded rod configured for extending through the hole extending through the stem.

The attachment wing may be configured to rotate independently from the stem.

The cross-section of the stem in a plane perpendicular to the stem length may be dimensioned according to the slat distance.

The stem may have a squared cross section with two opposite corners of the square being rounded. This may have the advantage that the attachment wing and stem of the panel fitting can be inserted between the slats and rotated up to 90 degrees about a centre axis extending through the stem in the stem length direction, such that the rounded corners pass a slat side and the sharp corners of the squared cross section inhibit further rotation. This may be advantageous when the stem and attachment wing are integrally formed and a rotation of the attachment wing results in a rotation of the stem.

The panel fitting may comprise a rotation block element.

The sharp corners may each form a rotation block element.

The rotation block element limits further rotation of the attachment wings after being inserted between the slats and after an initial rotation of the attachment wings.

The panel fitting may have a stem with a stem shape that restricts rotation of the attachment wings more than 90 degrees when inserted in the slat wall panel.

At least one attachment wing may comprise a rotation block element protruding upwards from the at least one attachment wing, the rotation block element restricting rotation of the attachment wing more than 90 degrees when inserted in the slat wall panel.

The rotation block element may limit the risk of rotating the attachment wing more than 90 degrees such as 180 degrees where the attachment wing is again free from the track.

The cross section of the stem in the plane perpendicular to the stem length or stem height may be substantially round with one sharp corner i.e. droplet formed.

The one corner may form the rotation block element.

The rotation block element may provide a natural stop of the rotation of the stem and the attachment wing at 90 degrees where the attachment wing is optimally placed in the track to secure the panel fitting in the slat wall panel.

The cross section of the stem in the plane perpendicular to the stem length or stem height may be circular, round, oval, or polygonal.

The stem may have any of these shapes in a cross section with some material removed i.e. the stem may have the squared cross section with two rounded corners with some material removed providing a substantial H-shaped cross-section or a circular cross section with some material removed in the middle providing substantially a doughnut shape. Such embodiments have the advantage of saving material and/or may be optimized for manufacturing by injection moulding
The attachment wing may be configured to engage with the track by a clockwise rotation of the attachment wing and/or a counter-clockwise rotation of the attachment wing.

Additionally and/or alternatively, the rotation block element may extend from at least one attachment wing.

The rotation block element may extend parallel to the stem.

A stem with a circular cross section may not in itself stop rotation of the attachment wing. Rotation may instead be limited by the rotation block element extending from the attachment wing, abutting the slat side after rotation of the attachment wing. The rotation block element may also provide a rotation block element in embodiments where the attachment wing and stem are not integrally formed or formed in one piece.

The rotation block element may alternatively and/or additionally extend sidewards from the stem.

The rotation block element of the panel fitting may provide a rotation block after a rotation of the attachment wing in the range of 10 to 170 degrees after insertion of the panel fitting between the two slats. Preferably, the rotation block element provides a rotation block after a rotation of the attachment wing in the range of 45 to 135 degrees. Most preferred the rotation block element provides a rotation block after a rotation of the attachment wing of substantially 90 degrees.

The panel fitting is configured to be detachably attached to the slat wall panel.

The panel fitting is attached to slat wall panel by guiding each attachment wing, such that the wing engages with the track of the slat wall panel. The track is formed between the support plate and one of the first and second slats.

At least one attachment wing may extend from the stem.

At least one attachment wing may extend substantially perpendicularly from the stem relative to the centre axis.

At least one attachment wing may extend laterally from, or radially from the centre axis of the stem, potentially at one end of the stem.

The track of the slat wall panel may be premade in at least one of the slat sides, as previously described. In such embodiments the support plate can be of a non-compliant material. In these embodiments, at least one attachment wing may extend sidewards substantially from the middle of the stem. These embodiments are especially advantageous in slat wall panels designed for exterior walls where some compliant materials are not suitable for outside use.

Panel fittings adapted to be attached to a slat wall panel comprising a premade track in at least one of the slat sides and a track formed between the slat and support plate may be envisioned.

The premade track may be comprised in the same slat as the slat where the track is formed between the slat and support plate. Alternatively and/or additionally, the premade track is comprised in the first slat and a track is formed between the second slat and the support plate.

The panel fitting may comprise a secondary attachment wing.

The first and secondary attachment wing may each form a track between the support plate and a slat, such as slats arranged next each other.

The first and secondary attachment wing may be configured such that the first attachment wing forms a track between the slat and the support plate, and the secondary wing engages with the premade track in the side of the slat.

The slat may comprise two premade tracks and the panel fitting may comprise two attachment wings, wherein each wing is adapted to engage with one of the two tracks, respectively.

At least one attachment wing has a minor dimension extending in the fitting height direction and a major dimension extending perpendicular to the minor dimension.

In embodiments where the track is formed between the support plate and the slat, the attachment wing may have a thickness in the minor dimension i.e. in the panel fitting height direction that allows the wing to be inserted between the slat and support plate. At least one attachment wing may have a thickness in the length direction of the stem i.e. in the panel fitting height direction in the range of 0.5 to 5 mm.

The slat wall panel of the set of parts may have a slat with an acute angle and a track formed in the triangular space between the slat and support plate. In these embodiments, the attachment wing may have a thickness corresponding substantially to the length of the stem. In such embodiments, the attachment wing may have a profile matching the triangular track giving the panel fitting a conical or trapezoid profile.

The attachment wing may have a rounded profile matching a rounded track formed in a rounded slat side.

At least one attachment wing may have an elliptical, superelliptical, triangular, square, polygonal, squircle-shaped, circular, or oval shape extending from the stem in a plane perpendicular to the stem length or centre axis i.e. the wing may be partly elliptical in shape because it extends from the stem.

The attachment wing may have at least one bevelled edge.

The attachment wings may be substantially identically shaped. Alternatively, the wings are shaped differently, such as one attachment wing forming part of a triangle and the secondary attachment wing forming part of a square.

At least one attachment wing may comprise a curved edge and a straight edge.

The curved edge may be bevelled.

In these preferred embodiments, the bevelled edge may be adapted to form the track between the slat and the support plate. The bevelled edge may have the advantage of reducing friction between the attachment wing and the slat wall panel during formation of the track.

The panel fitting may further have a friction enhancing member.

The panel fitting may both have a friction enhancing member and a friction reducing member, such as a bevelled edge. This has the potential advantage of the friction reducing member reducing friction in an initial track forming phase and the friction enhancing member increasing friction when the panel fitting has been fully attached to the slat wall panel.

The friction enhancing member may increase friction between the panel fitting and the slat wall panel.

The friction enhancing member may alternative and/or additionally comprise at least one protrusion and/or elastic element, arranged on at least one attachment wing.

The protrusion may extend from the attachment wing in the height direction and be configured to engage frictionally with the slat back and/or the support plate when the attachment wing engages with the track.

The protrusion may be configured to engage destructively with the slat back.

The friction enhancing member has the potential advantage of providing a more stable attachment of the panel fitting to the slat wall panel.

The friction enhancing member may comprise a corrugated surface on one or more attachment wings.

Preferably, the friction enhancing member engages with a surface of the slat when the attachment wing engages with the track. Preferably, the friction enhancing member engages with the slat back. This may have the advantage that any potential wear and tear produced by the frictional force between the friction enhancing member and the slat occurs on a surface of the slat which is not directly visible when looking at the slat wall panel.

The friction enhancing element may be an O-ring.

The O-ring may be made of rubber.

The O-ring may be arranged around the stem.

The O-ring may be arranged in abutment with the attachment wing and be fixed between the attachment wing and slat when the wing engages with the track.

The friction enhancing element may alternatively comprise a felt material attached to a surface of the panel fitting, such as a surface of the wing.

As mentioned, at least one attachment wing can extend sidewards or laterally from an end of the stem. Alternatively, at least one attachment wing may extend sidewards or laterally from substantially a middle of the stem between two axial ends of the stem.

The panel fitting comprises two attachment wings. The two attachment wings may extend sidewards from the stem in opposite directions.

The attachment wings may both extend from an axial end of the stem. This has the potential advantage of each wing being able to engage with a track formed between the support plate and one of the at least two slats. Another potential advantage is that one wing is arranged to engage with a track in the first slat, and the other wing is arranged to engage with a track in the second slat. This has the potential advantage of providing a more secure fastening of the panel fitting to the slat wall panel.

Alternatively, the two attachment wings may extend sidewards or laterally substantially from the middle of the stem in the stem length or stem height direction. In these embodiments, the wings are preferably aligned to engage with premade tracks in the first and second slats when the panel fitting is inserted between the first and second slats.

The panel fitting may comprise one attachment wing extending laterally form an axial end of the panel fitting and a secondary attachment wing extending from substantially the middle of the stem in the stem height direction.

The panel fitting may comprise a penetration device. The penetration device has the potential advantage of limiting movement of the panel fitting in a direction along the length direction of the slat i.e. in a direction along the oblong opening when the panel fitting is attached to the slat wall panel. The penetration device has the further advantage that it allows the panel fitting to be quickly attached to the support plate without guiding the wings into the tracks and the panel fitting can be easily rearranged during installation of the accessory.

The penetration device may be provided at an end of the stem.

The penetration device may be provided at an end of the stem, said end of the stem being for facing the support plate when the panel fitting is attached to the slat wall panel.

The penetration device may extend in the stem length direction. This may be an advantage in panel fittings that are rotated into attachment with the slat wall panel.

The centre axis may extend through the penetration device. This has the advantage that the centre of rotation is around the penetration device and provides an easy installation. It further has the potential advantage of keeping the panel fitting in position while being rotated.

Alternatively, the penetration device may extend at an angle relative to the stem length direction. This may be an advantage in panel fittings that are not rotated or only partly rotated into attachment with the slat wall panel. For example, a penetration device extending at an angle relative to the stem length direction may be an advantage in embodiments where the stem has a substantial U-shape.

The penetration device may extend from an end of the stem facing the support plate when the panel fitting is attached to the slat wall panel.

The penetration device may be adapted to penetrate the support plate. The combined effect of the penetration device and at least one attachment wing limits translational movement of the panel fitting in all directions when attached to the slat wall panel. Thereby, the panel fitting may only be moved by a rotational movement resulting in a secure attachment of the panel fitting to the slat wall panel.

The penetration device may be especially advantageous in embodiments of the set of parts where the support plate of the slat panel is of a compliant or resilient material.

In set of parts where the support plate is made of a compliant material, such as felt, the penetration device may non-destructively penetrate the support plate and still provide a fastening of the panel fitting.

The penetration device penetrating the support plate is not considered as damaging to the slat wall panel, when the support plate is made of an elastically deformable material such as felt.

The penetration device may be a pin or needle like element.

The pin preferably may have a length in the range of 0.3 to 1 cm.

The penetration device is preferably shorter than the thickness of the support plate.

The penetration device may be made of a metal or a plastic polymer.

The penetration device and the panel fitting may be integrally formed or formed in one piece.

The penetration device may alternatively be or comprise a hook shape.

The panel fitting may comprise the accessory. A potential advantage of this is that the accessory is simple to mount and requires no additional fastening means.

The accessory may extend from the stem of the panel fitting.

The accessory may be selected from the list comprising a knob, a hook, a picture frame, a shelf, a lamp, or a hanger.

The accessory and panel fitting may be integrally formed or formed in one piece.

Alternatively and/or additionally, the panel fitting comprises the attachment element for connection to the accessory.

The attachment element may be comprised in the stem of the panel fitting. The attachment element may form two flanges extending in parallel.

The flanges may form part of the stem.

The flanges may extend from the stem.

The flanges may be adapted to receive and fasten a cable, such as a cable for a lamp or electronic device between the flanges. A potential advantage of such an attachment element may be that the cable can be installed in an oblong opening of the slat wall panel while being substantially flush with the slat front.

The attachment element may additionally and/or alternative be, comprise or form a hole in the panel fitting.

The attachment element may be, comprise, or form a non-circular hole, depression or spacing, such as a hole for receiving a hex key, Philips, torx, or hexagonal screwdriver head.

The hole may be arranged between the two flanges. This has the potential advantage of providing an attachment element with means for cable fastening and a hole, such as a hole for receiving a suitable key or head as mentioned above.

The hole may be L-shaped, H-shaped, square with rounded sides, cross-shaped, or polygonal such as triangular, square, rectangular, hexagonal, heptagonal, or pentagonal.

The hole may alternatively be circular or oval such as a hole for receiving a bolt or a dowel or a threaded hole or insert for receiving a screw. This has the advantage of providing an insert in the slat wall panel via the panel fitting without damaging the slat wall panel or panel fitting, such as a place for attaching a screw without screwing directly into the slat wall panel. It also has the advantage of providing means for relocating an accessory that requires a screw connection without having to drill a screw hole.

The attachment element may be, form, or comprise two or more holes, such as two holes with different shapes and/or depths.

The attachment element may be, form, or comprise a hole with differently shaped circumferences in a depth direction of the hole.

The hole may have a bottom part with a circular and/or round or rounded circumference.

The hole may alternatively and/or additionally have a top part with a non-circular circumference such as an oval, polygonal, square or hexagonal circumference, such as for receiving a hex key.

The attachment element may alternatively and/or additionally be, comprise or form a protrusion.

The protrusion may extend from the stem, such as along the centre axis.

The protrusion may be a threaded protrusion such as a screw, a bolt, or a nail.

The protrusion may be L-shaped, H-shaped, square with rounded sides, cross-shaped, or polygonal such as triangular, square, rectangular, hexagonal, heptagonal, or pentagonal.

The attachment element may be or comprise a magnet or magnetically attracted element.

The magnetic element may be arranged inside the stem. Alternatively and/or additionally the magnetic element is arranged on a surface of the panel fitting, such as on a surface of the stem.

The panel fitting may comprise both the attachment element and the accessory.

The panel fitting may further comprise a retainment element.

The retainment element may protrude or extend laterally or radially from the stem.

The retainment element may be configured to extend onto the slat front surface of at least one of the at least two slats when the panel fitting is attached to the slat wall panel.

The retainment element may protrude from an axial end of the stem. The retainment element may protrude from an end opposite the end of the attachment wing.

The shortest distance extending between the attachment wing and retainment element may be shorter than the slat thickness.

The retainment element may protrude laterally from the stem in substantially the same direction as the attachment wing. This has the potential advantage that the attachment wing engages with the back side of the slat and the retainment element engages with the front side of the same slat thereby providing a more secure attachment to the slat.

The retainment element may protrude laterally from the stem in a direction different from the direction that the attachment wing extends, such as in the opposite direction. In such embodiments, the attachment wing may engage with the back side of the first slat and the retainment element may engage with the front side of the second slat when the panel fitting is attached to the slat wall panel.

The set of parts may further comprise a retainment element adapted to protrude laterally or radially from the stem when attached to the panel fitting.

The retainment element may be arranged such that at least one of the at least first and second slats is arranged, at least partly, between the retainment element and the attachment wing when the panel fitting is attached to the slat wall panel.

The retainment element may provide a more secure mounting of the panel fitting to the slat wall panel by limiting unintentional rotation of the panel fitting, such as rotation caused by the weight of the accessory.

The retainment element and the panel fitting may be integrally formed. The retainment element may be circular and extend radially from the stem of the panel fitting.

The retainment element may be a separate part comprised in the set of parts.

The retainment element may be formed separately from the attachment wing and/or stem.

The retainment element may be configured to be arranged around the stem or by an end of the stem i.e. in extension of the stem by an axial end thereof.

The retainment element may protrude laterally or radially from the stem, such as from the end of the stem, when the retainment is attached to the panel fitting. Extending from the stem may be understood as the retainment element being a separate part arranged around the stem or as an extension of the stem and protruding laterally or radially outwards.

The retainment element may have a cross sectional shape that is circular, oval, or polygonal such as triangular, square, pentagonal, hexagonal, heptagonal, octagonal, nonagonal, or decagonal. The retainment element may alternatively have the shape of a cross or cross-like element. The retainment element may have any of these shapes in a plane perpendicular to the centre axis or stem length.

The retainment element may be attached to the panel fitting by means of a bolt and nut.

The attachment element of the panel fitting may be a hole for receiving a bolt. The bolt may be attached to the panel fitting. The retainment element can then be guided onto the bolt through a hole in the retainment element and fastened to the panel fitting by means of the bolt.

The set of parts may comprise an installation as described in the second aspect.

The panel fitting may comprise a pattern such as a logo. The logo may be drawn on the panel fitting, and/or carved into the panel fitting, and/or be integrated in the panel fitting from manufacturing such as being formed during casting, or moulding of the panel fitting.

### Second Aspect

According to a second aspect of the present disclosure, which is not covered by the enclosed claims, the above object may be achieved by a panel fitting for being attached to a slat wall panel mounted on a surface of a building for mounting an accessory on the slat wall panel. The slat wall panel comprises at least a first and a second slat arranged on a front surface of a support plate, wherein the panel fitting comprises:
- the accessory and/or an attachment element for connection to the accessory,
- a stem,
- at least one attachment wing connected to and protruding sidewards from the stem, and
- a penetration device provided at an end of the stem, said end of the stem facing the support plate when the panel fitting is attached to the slat wall panel.

The panel fitting may be attachable to the slat wall panel by inserting the panel fitting in between the first and second slats, whereby the penetration device may penetrate the support plate, and, then, guiding the attachment wing such that the wing engages with a track of the slat wall panel. The track may be formed between the support plate and one of the first and second slats and/or may be formed in at least one of the first and second slats.

Alternatively, the panel fitting is a panel fitting for being attached to a slat wall panel for mounting an accessory on the slat wall panel, the slat wall panel being mounted on a surface of a building and comprising at least a first and a second slat arranged on a front surface of a support plate, the slat wall panel further comprising a track, wherein the track is formed between the support plate and one of the first and second slats and/or is formed in at least one of the first and second slats, wherein the panel fitting comprises:
- the accessory and/or an attachment element for connection to the accessory,
- a stem (11),
- at least one attachment wing connected to and protruding sidewards from the stem, and
- a penetration device provided at an end of the stem, said end of the stem being for facing the support plate when the panel fitting is attached to the slat wall panel,
whereby the panel fitting is suitable for being attached to the slat wall panel by inserting the panel fitting in between the first and second slats, whereby the penetration device penetrates the support plate, and, then, guiding the attachment wing such that the attachment wing engages with the track.

The panel fitting may be adapted to be attached to the slat wall panel by inserting the panel fitting in between the first and second slats of the slat wall panel.

The slat wall panel may be according to the slat wall panel as described for the first aspect.

The panel fitting may be attachable to the slat wall panel by guiding the attachment wing such that the wing engages with a track of the slat wall panel. By "guiding" it may be meant that the panel fitting can be inserted between the slats, and the attachment wing can be displaced such that it moves from being in the oblong opening or spacing between two slats to the track of the slat wall panel.

The stem of the panel fitting has a stem length extending in a length direction. The stem length is preferably in the range of 1 to 2 cm, more preferably substantially 1.5 cm.

The stem of the second aspect may be according to the stem as described for the first aspect.

The at least one attachment wing of the second aspect may be according to the attachment wing described in the first aspect.

The attachment wing may be guided such that the attachment wing engages with the track by means of a bending part comprised in the panel fitting.

The bending part of the second aspect may be according to the bending part as described for the first aspect.

The bending part may be a hinge connection and/or an elastic part.

The bending part may be comprised in the attachment element, the accessory, or the stem.

Bending the part of the panel fitting comprising the bending part may decrease a width of the panel fitting, the width being perpendicular to the length direction of the stem. By bending the bending part of the panel fitting prior to insertion in the slat wall panel, the attachment wing engages with the track when the panel fitting returns to an unbent state.

In embodiments where the bending is in the form of an elastic material, the panel fitting may be attachable to the slat wall panel by applying a force to bend the panel fitting, inserting the panel fitting in the slat wall panel and releasing the force such that the elastic material returns to an unbent state guiding the attachment wing into the track.

The attachment wing may be guided into the track by rotating the part of the panel fitting comprising the attachment wing, such that the wing engages with the track of the slat wall panel.

The attachment wing and the stem may be integrally formed or formed in one piece, such that the attachment wing is rotated by rotation of the stem.

The stem may have a circular or oval cross section in a plane perpendicular to the stem length or centre axis.

The panel fitting may comprise at least one rotation block element.

The rotation block element may be comprised in the stem.

The rotation block element in the second aspect may be as described for the rotation block element in the first aspect.

The panel fitting may have a stem with a stem shape that restricts rotation of the attachment wing more than 90 degrees when inserted in the slat wall panel.

The at least one attachment wing may comprise a rotation block element protruding upwards from the at least one attachment wing, the rotation block element restricting rotation of the attachment wing more than 90 degrees when inserted in the slat wall panel.

A cross section of the stem in a plane perpendicular to a stem length or centre axis may be square or rectangular, potentially with two sides of the square or rectangle being rounded.

The cross section of the stem in the second aspect may be as described for the cross section of the stem in the first aspect.

The two straight sides of the square preferably each has a length in the range of 1 to 3 cm. One potential advantage of this is that the panel fitting can be inserted between the slats of a slat wall panel comprising slats arranged at a mutual distance in the range of 1 to 3 cm, and the attachment wing and stem rotated up to 90 degrees about a centre axis extending in the stem length direction, such that the rounded corners pass a slat side of the slat and the sharp corners of the squared cross section inhibit further rotation.

The two sharp corners may each form a rotation block element.

This may be advantageous when the stem and attachment wing are integrally formed or formed in one piece, and a rotation of the attachment wing results in a rotation of the stem. The stem thereby may form a rotation block element that may limit the risk of rotating the attachment wing more than 90 degrees, such as 180 degrees where the attachment wing is again free from the track. It may simultaneously provide a natural stop of the rotation of the stem and the attachment wing at 90 degrees where the attachment wing is optimally placed in the track to secure the panel fitting in the slat wall panel.

Additionally and/or alternatively, a rotation block element may extend from the at least one attachment wing in parallel to the stem.

This may be advantageous in embodiments where the stem has a circular cross section that does not in itself stop rotation, and rotation is instead limited by the rotation block element abutting the slat side after rotation of the panel fitting.

The rotation block element may provide a rotation block element in embodiments where the attachment wing and stem are not integrally formed.

The rotation block element may alternatively and/or additionally extend sidewards from the stem.

The rotation block element of the panel fitting may be made to provide a rotation block after a rotation of the attachment wing in the range of 10 to 170 degrees after insertion of the panel fitting between the two slats. Preferably, the rotation block element provides a rotation block after a rotation of the attachment wing in the range of 45 to 135 degrees. Most preferred the rotation block element provides a rotation block after a rotation of the attachment wing of substantially 90 degrees.

Preferably, the panel fitting is configured to be detachably attached to the slat wall panel.

The at least one attachment wing may have a thickness in the length direction of the stem in the range of 0.5 to 5 mm. In alternative embodiments, the wing may have a thickness corresponding substantially to the length of the stem.

The attachment wing may have a substantially conical profile.

Preferably, the at least one attachment wing comprises a curved side and a straight side. The curved side may be bevelled. In these preferred embodiments, the bevelled side is adapted to form the track between the slat and the support plate. The bevelled side has the advantage of reducing friction between the panel fitting and the slat wall panel during formation of the track.

Preferably, the panel fitting comprises two attachment wings.

The two attachment wings may extend sidewards from the stem, or radially from the centre axis of the stem, preferably in substantially opposite directions.

The attachment wings may both extend from an end of the stem. This has the potential advantage of each wing being able to engage with a track formed between the support plate and one of the at least two slats. Another potential advantage is that one wing is arranged to engage with a track in the first slat, and the other wing is arranged to engage with a track in the second slat. This has the advantage of providing a more secure fastening of the panel fitting to the slat wall panel.

Alternatively, the two attachment wings may extend sidewards substantially from the middle of the stem measured in the length direction of the stem. In these embodiments, the wings are preferably aligned to engage with tracks in the first and second slats when the panel fitting is inserted between the first and second slats.

Panel fittings adapted to be attached to a slat wall panel comprising a premade track in at least one of the slat sides and a track formed between the support plate may be envisioned.

The panel fitting may comprise a secondary wing, such that one wing forms a track between the slat and the support plate, and the secondary wing engages with a track in the side of the slat panel.

The penetration device comprised in the panel fitting may be adapted to penetrate the support plate.

The penetration device of the second aspect may be as described for the penetration device of the first aspect.

The penetration device may have the advantage of limiting a sliding movement of the panel fitting across a surface of the slat wall panel when the panel fitting is attached to the slat wall panel.

The combined effect of the penetration device and the at least one attachment wing may limit translational movement of the panel fitting in several or all directions when attached to the slat wall panel. Thereby, the panel fitting may potentially only be moved by a rotational movement resulting in a secure attachment of the panel fitting to the slat wall panel. The penetration device may be especially suited for mounting on slat wall panels with a support plate made of a compliant material, such as felt.

When attached to such slat wall panels, the penetration device may non-destructively penetrate the support plate and still provide a fastening of the panel fitting.

The penetration device may be a pin or a needle or may be a pin-like or needle-like element.

The penetration device preferably has a length in the range of 0.3 to 1 cm.

The penetration device may be made of a metal or a plastic polymer.

The penetration device may be integrally formed or formed in one piece with a part of the panel fitting from which the penetration device extends, which may be the stem. Alternatively, they may be manufactured in two pieces that are attached to each other, such as one end of the penetration device being inserted into the part of the panel fitting from which the penetration device extends.

The accessory and/or attachment element of the second aspect may be according to the accessory and/or attachment element as described for the first aspect.

The panel fitting may comprise the accessory. A potential advantage of this is that the accessory is simple to mount and requires no additional fastening means.

The accessory may extend from the stem of the panel fitting.

The accessory may form part of the stem.

The accessory may be a knob or a hook. In such embodiments, the accessory and panel fitting may be integrally formed or formed in one piece.

Alternatively and/or additionally, the panel fitting comprises the attachment element for connection to the accessory.

The accessory may be one of a picture frame, a shelf, a lamp, a hanger, or a knob.

The attachment element may be or comprise an indentation in the panel fitting.

The indentation may form a hook structure for fitting the accessory. The accessory may be a wire to an electronic device such as a lamp, a TV, a loudspeaker, and/or stereo. A potential advantage of such an accessory is that wiring can be installed in the oblong openings of the slat wall panel while being substantially flush with the slat front.

The attachment element may alternatively be a non-circular hole such as a hole for receiving a hex key, Philips, torx, or hexagonal screwhead. It may alternatively be a circular hole such as a hole for receiving a bolt or a dowel. This has the advantage of providing an insert in the slat wall panel without damaging the slat wall panel or panel fitting. It also has the advantage of providing means for relocating an accessory requiring a screw connection without having to drill a new screw hole.

The attachment element may be or comprise one or more of a depression, a spacing, a protrusion, a screw hole, and a knob. The protrusion may be a threaded protrusion such as a screw, a bolt, or a nail.

The panel fitting may comprise both the attachment element and the accessory.

The panel fitting may further comprise a retainment element. The retainment element may protrude laterally or radially from the stem. In some embodiments, at least one of the at least first and second slats is arranged between the retainment element and the at least one attachment wing when the panel fitting is attached to the slat wall panel.

The retainment element of the second aspect may be according to the retainment element as described in the first aspect.

The panel fitting may further comprise a retainment element protruding sidewards from the stem when attached to the panel fitting, whereby at least one of the at least first and second slats is arranged between the retainment element and the at least one attachment wing when the panel fitting is attached to the slat wall panel. When attached to the slat wall panel, at least one of the at least first and second slats is arranged between the retainment element and the at least one attachment wing when the panel fitting is attached to the slat wall panel. One advantage of the retainment element is that it provides a more secure mounting of the panel fitting to the slat wall panel by limiting unintentional rotation of the panel fitting, such as rotation caused by the weight of the accessory.

The retainment element and the panel fitting may be integrally formed. The retainment element may be circular and extend sidewards from the stem of the panel fitting.

The retainment element may be attached to the panel fitting by means of a bolt and nut. The attachment element of the panel fitting may be a hole for receiving a bolt. The bolt may be attached to the panel fitting. The retainment element can then be guided onto the bolt through a hole in the retainment element and fastened to the panel fitting by means of the bolt.

The attachment element may be, form, or comprise a hole with differently shaped circumferences in a depth direction of the hole, as described in the first aspect.

The hole may have a bottom part with a circular and/or round or rounded circumference.

The hole may alternatively and/or additionally have a top part with a non-circular circumference such as an oval, polygonal, square or hexagonal circumference, such as for receiving a hex key.

The attachment element may form part of a connection element.

The connection element may be configured to engage with a connection element of an installation key.

The panel fitting may form part of a set parts comprising the panel fitting and an installation tool.

The installation tool may be adapted to mate with the attachment element for attaching the panel fitting to the slat wall panel.

The connection element of the installation tool may be an elongated member extending from a tool head.

The elongated member may comprise at least a first part and a part.

The first part may be arranged proximal to the tool head relative to the second part.

The second part may extend from the first part.

The first part of the elongated member of the installation tool may be configured to engage with the top part of the hole comprised in the attachment element.

The second part of the elongated member of the installation tool may be configured to engage with the bottom part of the hole comprised in the attachment element. This may be an advantage in embodiments where the bottom part of the hole of the attachment element has a circular circumference and the top part of the hole has a non-circular circumference. In such embodiments the circular bottom part of the hole may engage with a cylindrical second part of the installation tool and the non-circular top part of the hole may engage with a non-circular first part of the installation tool. This may have the advantage that the engagement of the circular parts provide stability in the engagement between the installation tool and panel fitting when attaching the panel fitting to the slat wall panel, such as by a rotational movement.

### Third Aspect

According to a third aspect of the present disclosure the above object may be achieved by use of a panel fitting according to claim 15.
The panel fitting of the third aspect may be according to the panel fitting as described in the first aspect.

The accessory and/or attachment element for connection to the accessory may be as the accessory and/or attachment element as described in either of the first and second aspects.

At least one attachment wing may be as at least one attachment wing as described in the first and second aspects.

Similarly, the panel fitting comprises two attachment wings and may comprise a rotation block element, a retainment element and/or a penetration device as described in either of the first and second aspects.

Further, the panel fitting may be for attaching to a slat wall panel as described in either of the first and second aspects.

The slat wall panel is for being mounted on a surface of a building and comprises at least a first and a second slat arranged on a front surface of a support plate, and the panel fitting is attached to the slat wall panel by inserting the panel fitting in between the first and second slats, and, then, at least one attachment wing is guided such that the attachment wing engages with a track of the slat wall panel, wherein the track is formed between the support plate and one of the first and second slats.

### Fourth Aspect

According to a fourth aspect of the present disclosure, which is not covered by the attached claims, the above object may be achieved by use of a panel fitting for attaching an accessory to a slat wall panel, wherein the panel fitting comprises:
- the accessory and/or an attachment element for connection to the accessory, and
- at least one attachment wing,
wherein the slat wall panel comprises at least a first and a second slat arranged on a front surface of a support plate, wherein a track is formed between the support plate and one of the first and second slats and/or is formed in at least one of the first and second slats, and wherein the panel fitting is attached to the slat wall panel by inserting the panel fitting in between the first and second slats and, then, guiding the attachment wing such that the attachment wing engages with the track of the slat wall panel.

The panel fitting of the fourth aspect may be as the panel fitting as described in either of the first and second aspects.

The accessory and/or attachment element for connection to the accessory may be as the accessory and/or attachment element as described in either of the first and second aspects.

At least one attachment wing may be as at least one attachment wing as described in the first and second aspects.

Similarly, the panel fitting may comprise a stem, two attachment wings, a rotation block element, a retainment element and/or a penetration device as described in either of the first and second aspects.

Further, the panel fitting may be for attaching to a slat wall panel as described in either of the first and second aspects.

### Fifth aspect

According to a fifth aspect of the present disclosure, which is not covered by the present claims, the above object may be achieved by a set of parts for attaching panel fittings to a slat wall panel for being mounted on a surface of a building. The panel fittings are for mounting one or more accessories on the slat wall panel, wherein the set of parts comprises at least a first and a second panel fitting and at least one installation tool. Each of the first and the second panel fittings comprises:
- at least one said accessory and/or an attachment element for connection to the at least one accessory, and
- at least one attachment wing,
wherein the first panel fitting comprises a first connection element that matches a corresponding first connection element of the installation tool, and the second panel fitting comprises a second connection element that matches a corresponding second connection element of the installation tool. The first and second connection elements of the associated first and second panel fitting are different from each other, and the corresponding first and second connection elements of the installation tool are different from each other. Connection of the connection element of the first or second panel fitting to the corresponding connection element of the installation tool rotationally fixates the installation tool to the connection element. The panel fitting may be attachable to the slat wall panel by inserting the panel fitting in between first and second slats of the slat wall panel, and, then, using the installation tool to rotate the panel fitting such that the wing engages with a track of the slat wall panel. The track is formed between the support plate and one of the first and second slats and/or is formed in at least one of the first and second slats.

A potential advantage of the set of parts according to the fifth aspect, i.e. comprising the installation tool, is that it provides a better grip on the panel fittings when attaching them to the slat wall panel.

Another potential advantage is that only one installation tool is needed for installing at least a first and second panel fitting with first and second connection elements, respectively, wherein the first and second connection elements are different from each other.

The at least first and second panel fittings may comprise a first and second stem, respectively.

The connection element of any one of the first and second panel fittings may be comprised in the accessory and/or attachment element of said panel fitting.

The stem or stems of the fifth aspect may be according to any one of the embodiments of stems as described for any of the first to fourth aspects. Additionally each of the at least one attachment wings of the panel fittings may be according to the at least one attachment wing described for any of the first and fourth aspects.

The at least one attachment wing of each of the panel fittings is connected to and protrudes laterally from the stem of the panel fitting. Each of the first and second stem preferably has a stem length extending in a length direction. The stem length of the first and second panel fitting may be different from each other. Each stem preferably has a length in the range of 1 to 2 cm, more preferably substantially 1.5 cm. Generally, the panel fittings are adapted to be attached to a slat wall panel comprising slats with a slat thickness substantially corresponding to the stem length of the panel fittings. The slat thickness may interchangeably be referred to as a slat depth.

The cross section of the stems of the at least two panel fittings in a plane perpendicular to the stem length is preferably squared with two sides of the square being rounded. The two straight sides of the square preferably each has a length in the range of 1 to 3 cm. One potential advantage of this is that the panel fittings can be inserted between the slats of the slat wall panel comprising slats arranged at a mutual distance in the range of 1 to 3 cm and rotated up to 90 degrees about a centre axis extending in the stem length direction, such that the rounded corners pass a slat side and the sharp corners of the squared cross section inhibit further rotation. This provides the advantage of a rotation block element, that limits the risk of rotating the panel fitting more than 90 degrees such as 180 degrees where the attachment wing is again free from the track. It simultaneously provides a natural stop of the rotation of the panel fitting at 90 degrees where the attachment wing is optimally placed in the track to secure the panel fitting in the slat wall panel.

Additionally and/or alternatively, a secondary rotation block element may extend from the at least one attachment wing in parallel to the stem. Thereby, the stem may have a circular cross section that does not in itself stop rotation, and rotation is instead limited by the rotation block element abutting the slat side after rotation of the panel fitting. The secondary rotation block element may alternatively and/or additionally extend sidewards from the stem.

The rotation block element of the panel fitting may be made to provide a rotation block after a rotation of the panel fitting in the range of 10 to 170 degrees after insertion of the panel fitting between the two slats. Preferably, the rotation block element provides a rotation block after a rotation of the panel fitting in the range of 45 to 135 degrees. Most preferred the rotation block element provides a rotation block after a rotation of the panel fitting of substantially 90 degrees.

Preferably, the panel fitting is configured to be detachably attached to the slat wall panel.

The panel fitting may comprise the accessory. A potential advantage of this is that the accessory is simple to mount and requires no additional fastening means. The accessory may extend from the stem of the panel fitting. In some of these embodiments, the accessory may be a knob or a hook. In such embodiments, the accessory and panel fitting may be integrally formed.

At least one of the panel fittings may comprise the attachment element for connection to the accessory.

The accessory may be one of a picture frame, a shelf, a lamp, a hanger, or a knob.

In some of these embodiments, the attachment element may be an indentation in the panel fitting. The indentation may be in the stem of the panel fitting. The indentation may form a hook structure for fitting the accessory. The accessory may be a wire to an electronic device such as a lamp, a TV, a loudspeaker, and/or stereo. A potential advantage of such an accessory is that wiring can be installed in an oblong opening of the slat wall panel between the slats while being substantially flush with a slat front of the slats.

The attachment element may alternatively be a screw hole or a hole for receiving a hex key. This has the advantage of providing a hole for a screw in the slat wall panel without damaging the slat wall panel or panel fitting. It also has the advantage of providing means for relocating an accessory requiring a screw connection without having to drill a new screw hole.

The attachment element may be one of a depression, a spacing, a protrusion, a screw hole, and a knob.

At least one of the first and second connection element of the first and second panel fitting may be comprised in the attachment element and/or accessory of the panel fitting.

In embodiments, where at least one of the panel fittings comprises an attachment element in the form of a hex screw hole, the connection element may be the hex screw hole and the corresponding connection element on the installation tool may be a hex screw.

In embodiments where at least one of the panel fittings comprises the accessory, the connection element of the panel fitting may be comprised in the accessory.

In embodiments, where at least one of the panel fittings comprises an accessory in the form of a knob, the connection element may be comprised in the knob.

In the set of parts, the first panel fitting may comprise an attachment element in the form of a hex screw hole and the second panel fitting comprises an accessory in the form of a knob, and the first connection element of the installation tool comprises a hex screw and the second connection element of the installation tool is adapted to grip around the knob. Preferably, the knob extends from the stem of the panel fitting in the length direction. The knob may have a non-circular cross section in a plane perpendicular to the length direction such that a corresponding connection element of the installation tool may fit around the non-circular cross section and a rotation of the installation tool results in a rotation of the panel fitting. The knob may have a knob head extending sidewards from an end of the knob. The connection element of the installation tool may be adapted to slide onto the knob and receive the knob head, such that the panel fitting and installation tool are locked to each other in the length direction. This has the potential advantage that a pulling of the installation tool in the length direction pulls the panel fitting which provides for a panel fitting that is easier to install and uninstall. During installation, the panel fitting comprising the knob may be slid into the connection element of the installation tool, the panel fitting may be placed in the slat wall panel and rotated to attach the panel fitting to the slat wall panel. During removal of the panel fitting, the corresponding connection element of the installation tool may be slid onto the knob, the installation tool may be rotated, and the panel fitting may be removed from the slat wall panel by pulling the installation tool.

The first connection element of the installation tool may be comprised in an elongated body. The elongated body may be cylindrical.

The second connection element of the installation tool may extend sidewards form the elongated body.

The elongated body may provide a finger grip section when the second connection element of the installation tool is engaging with a second connection element of a panel fitting. The second connection element may provide a finger grip section of the installation tool when the first connection element of the installation tool is engaging with a first connection element of the panel fitting.

### Sixth aspect

According to a sixth aspect of the present disclosure, which is not covered by the attached claims, the above object may be achieved by a panel fitting made by a method of manufacturing which may comprise the steps of:
- manufacturing the stem by a process selected from the group consisting of forming, casting, moulding, and lathing,
- manufacturing the attachment wing by a process selected from the group consisting of forming, casting, moulding and lathing,
- providing the penetration device by either:
   ∘ Attaching the penetration device to the stem by forcing an end of the penetration device into the stem, thereby securing the penetration device to the stem; and/or
   ∘ embedding the end of the penetration device in the stem during the casting process, wherein the stem is cast around the embedded penetration device end, thereby securing the penetration device to the stem; and/or
   ∘ forming the penetration device integrally with the stem during the forming of the stem, and
- providing the accessory and/or attachment element.

The panel fitting may be according to the panel fitting of any one or more of the above first to fifth aspects.

The stem may be made from a metal and/or plastic polymer. The stem may be made from zinc or brass. The stem may alternatively and/or additionally be made from Nylon or ABS.

The penetration device is preferably made of steel.

In embodiments where the stem is made of metal, the metal stem is preferably manufactured by a casting or moulding process. The at least one attachment wing is preferably integrally formed or formed in one piece with the metal stem. The stem and the attachment wing may be manufactured during the same manufacturing step. The penetration device is preferably forced into the metal stem, thereby securing the penetration device to the stem.

The attachment element and/or accessory may be integrally formed or formed in one piece with the stem and/or may be provided during the step of manufacturing the stem.

In embodiments where the stem is made of a plastic polymer, the polymer stem is preferably cast or moulded. The attachment wing and the stem are preferably integrally formed during the same manufacturing step. The penetration device is preferably provided by embedding the end of the penetration device in the stem during the casting process, wherein the stem is cast around the embedded penetration device end, thereby securing the penetration device to the stem.

The attachment element and/or accessory may be integrally formed with the stem and be provided during the step of forming the stem.

In embodiments where the stem is made of both a metal and a plastic polymer, the stem preferably has a metal stem core. It may be formed by a first casting step. The penetration device is preferably provided by forcing the end of the penetration device into the metal stem core, thereby securing the penetration device to the stem. The metal core may be covered by a plastic polymer exterior in a second casting step. The wings may be made of plastic polymer. The wings may be integrally formed with the polymer exterior. The attachment element and/or accessory may be formed in either of the metal core and polymer exterior.

### Brief Description of Drawings

In the following, embodiments will be described with reference to the schematic drawings, in which:
Figs 1A to 1C are side views of an embodiment of a panel fitting and a slat wall panel.
Figs 2A to 2C are side views of another embodiment of a panel fitting and a slat wall panel.
Fig. 3A is a side view of the panel fitting in Fig. 1.
Fig. 3B is a side view of the panel fitting in Fig. 3A.
Fig 3C is a front view of the panel fitting of Fig. 3A.
Fig. 4A is a side view of a modified version of the panel fitting shown in Fig. 3A with a retainment element and attachment element.
Fig. 4B is a side view of the panel fitting in Fig. 4A.
Fig 4C is a front view of the panel fitting in Fig. 4A.
Fig. 4D is a perspective view of the panel fitting in Fig. 4A.
Fig. 4E is a perspective view of a cross section of the panel fitting of Fig. 4D along line L2.
Fig. 4F is a perspective view of a cross section of the panel fitting of Fig. 4D along line L1.
Fig. 4G is a perspective view of a cross section of a modified version of the panel fitting in Fig. 4A shown in a cross section along line L2.
Fig. 5 is a perspective view of another modified version of the panel fitting in Fig. 3A with a rotation block element extending from each of the attachment wings.
Fig. 6 is a perspective view of another modified version of the panel fitting in Fig. 3A.
Fig. 7A is a perspective view of an installation tool.
Fig. 7B is a side view of the installation tool in Fig. 7A.
Fig. 7C is a bottom view of the installation tool in Fig. 7A.
Fig. 7D is a perspective view of the installation tool in Fig. 7A from another angle.
Fig. 8 is a side view of panel fittings in various degrees of engagement with a slat wall panel.
Fig. 9 is a side view of alternative panel fittings in various degrees of engagement with an alternative slat wall panel.
Fig. 10A is a perspective view of a modified version of the panel fitting in Fig. 3A.
Fig. 10B is a side view of the panel fitting in Fig. 10A.
Fig. 11 is a side view of the panel fitting in Fig. 4A without the penetration device.
Fig. 12A shows a panel fitting in three different stages with a U-shaped stem, a bending section, and a retainment element.
Fig. 12B shows the panel fitting in Fig. 12A in five different stages of attachment to a slat wall panel with the bottom section of the U-shaped stem substantially parallel to the support plate.
Fig. 13A shows a modified version of the panel fitting in Fig. 12A with the attachment element being configured to be fit between the arms of the U-shaped stem.
Fig. 13B shows the panel fitting of Fig. 13A with the bottom section of the U-shaped stem substantially perpendicular to the support plate.
Fig. 14A to 14B are perspective views of a modified version of the panel fitting in Fig. 4D with one attachment wing and a retainment element extending only in a direction opposite the attachment wing.
Fig. 14C is a modified version of the panel fitting in Fig. 14A with another embodiment of the rotation block element.
Fig. 15A to 15C are perspective views of modified version of the panel fitting shown in Fig. 14C with the retainment element and attachment wing extending in the same direction.
Fig. 16A is a perspective view of the panel fitting in Fig. 3A. Fig. 16B is a perspective view of modified version of the panel fitting in Fig. 4A with a logo integrated in the knob head 351i.
Figs. 16C to 16F are embodiments of the panel fitting in Fig. 16B from a front view showing the retainment elements and part of the attachment element, each with a different shape of the retainment element.
Figs. 16G to 16N are different embodiments of non-circular cross-sections of the attachment element and first connection element of the panel fitting in Fig. 16B shown from a front view..
Figs. 16O to 16Z are different embodiments of the panel fitting in Fig. 3C outlining different shapes of the cross section of the attachment wing or wings and the stem.
Figs. 17A is a front view of the panel fitting in Fig. 16A in a slat wall panel.
Fig. 17B is a side view of the panel fitting in Fig. 16A in engagement with an installation tool.
Fig. 17C shows the panel fitting in Fig. 17A being attached to the slat wall panel.

Reference signs refer to similar elements across various embodiments and figures described herein.

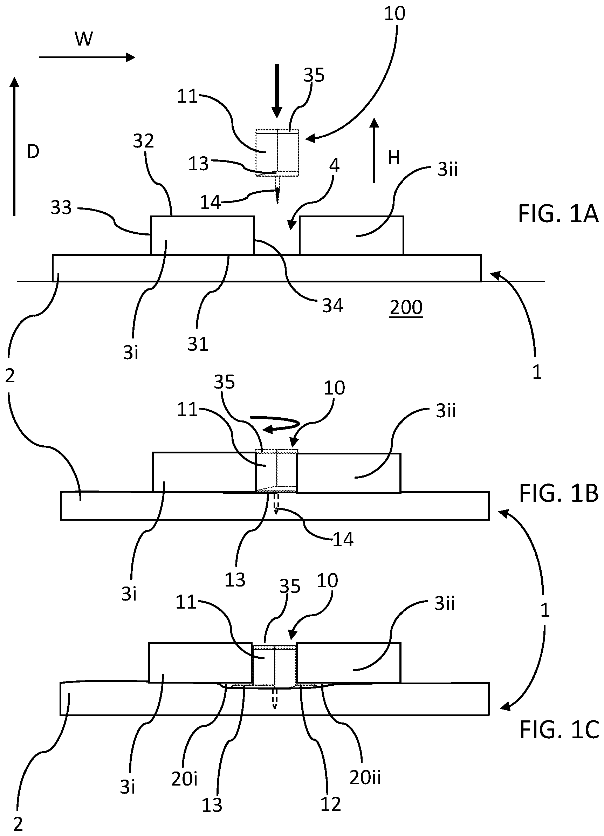

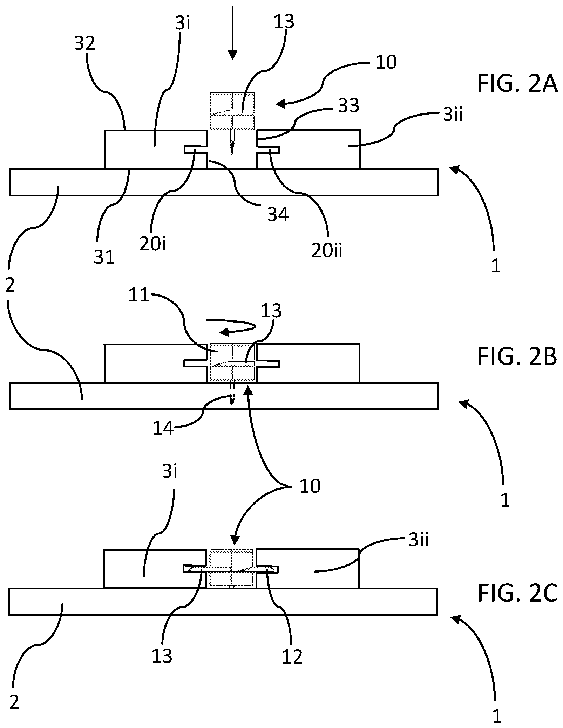

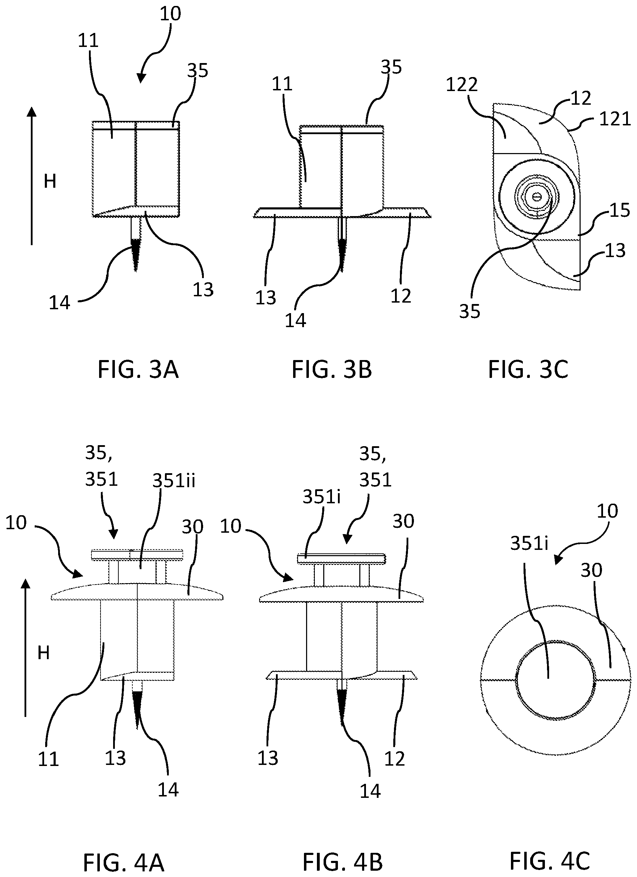

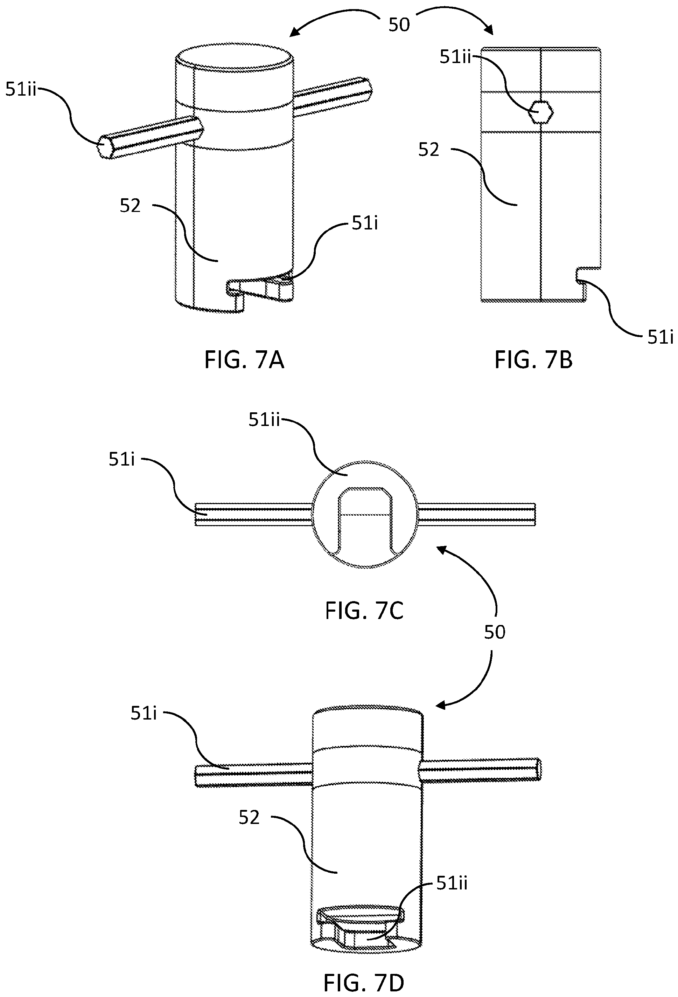

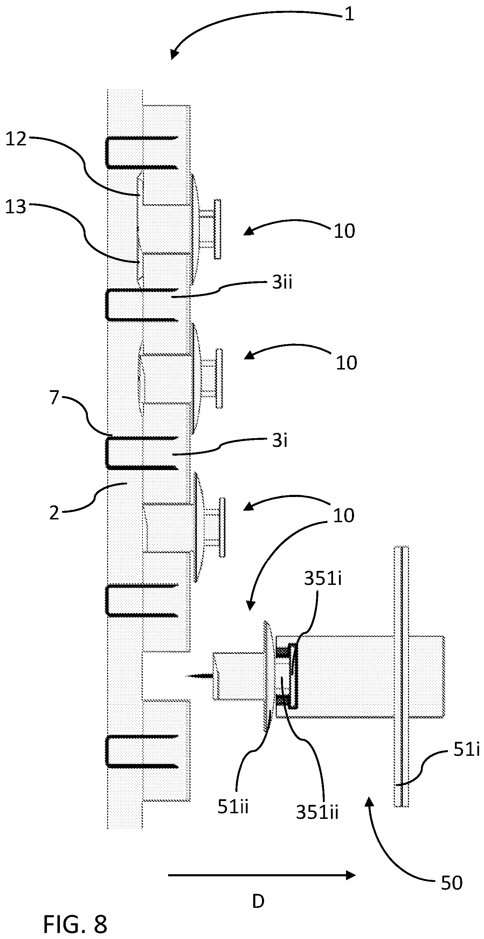

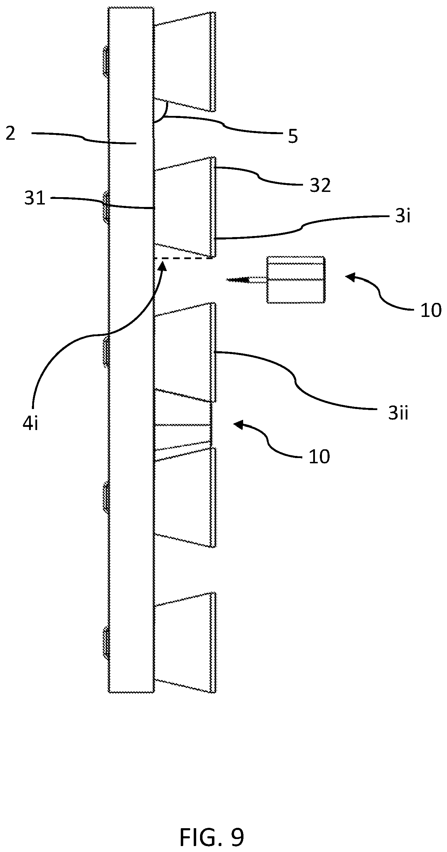

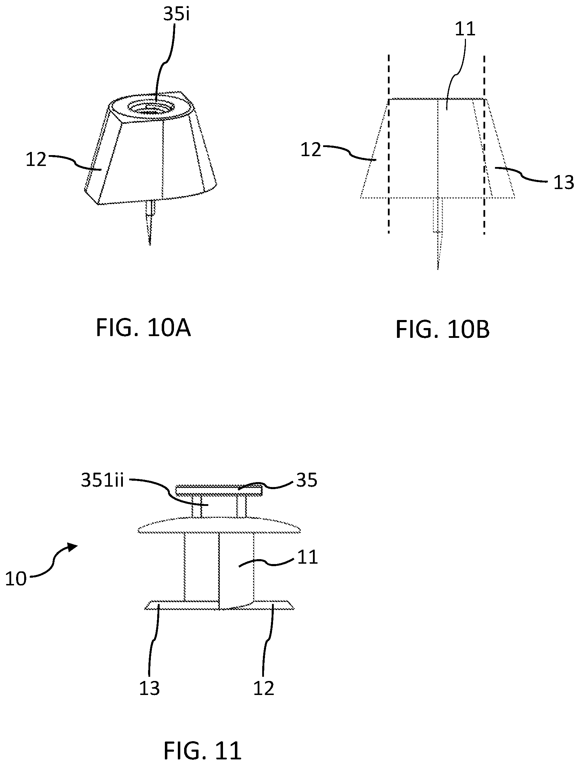

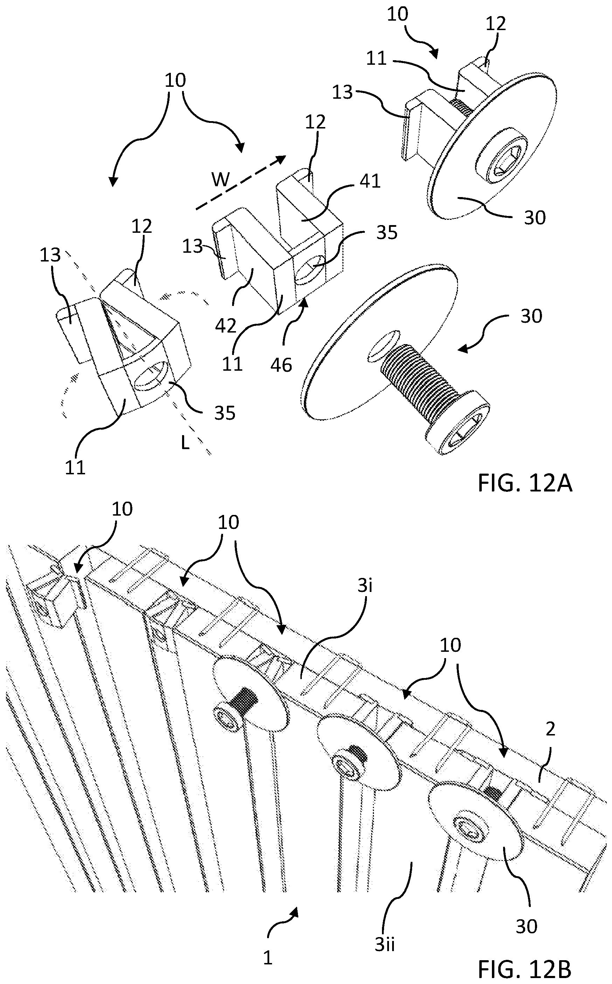

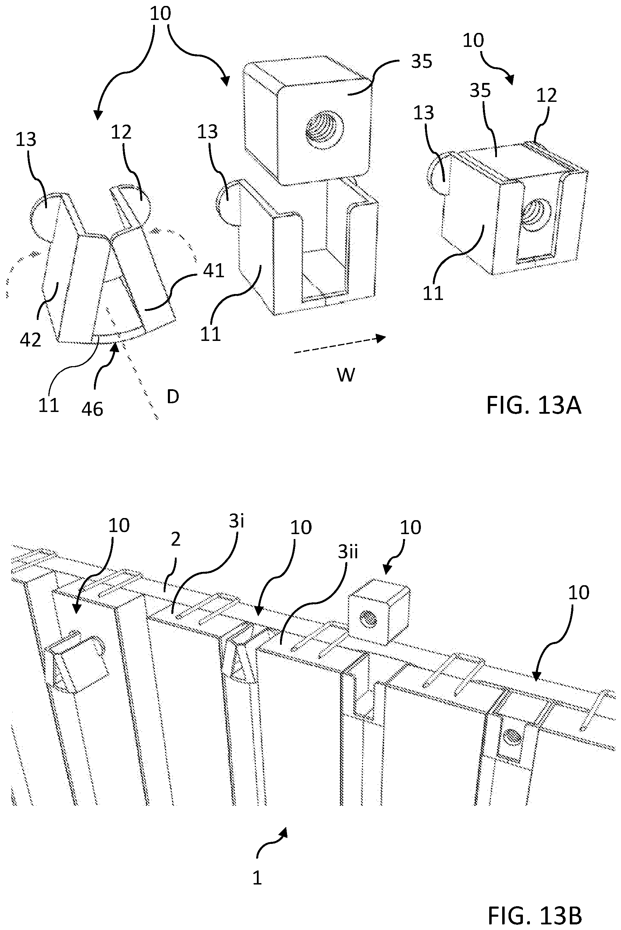

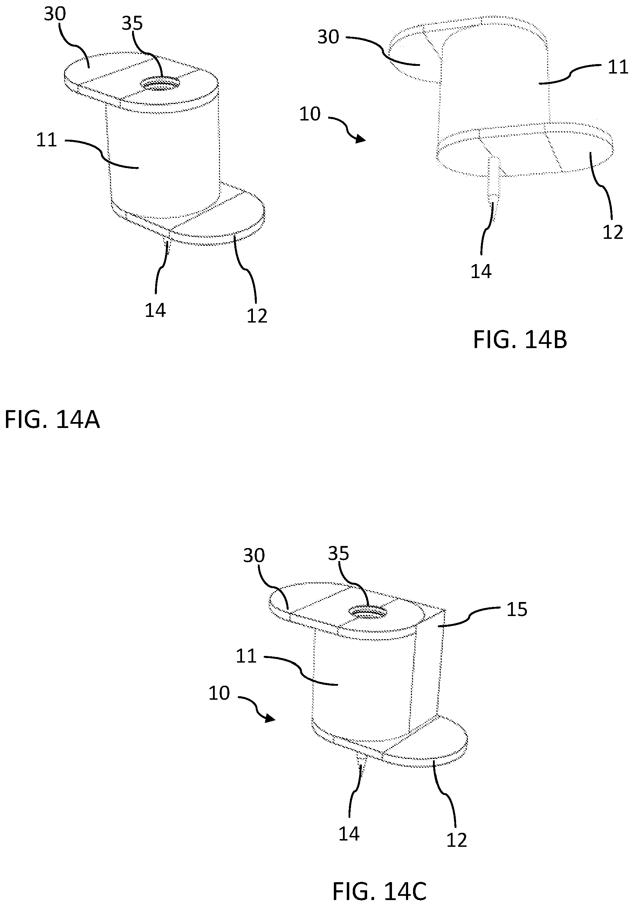

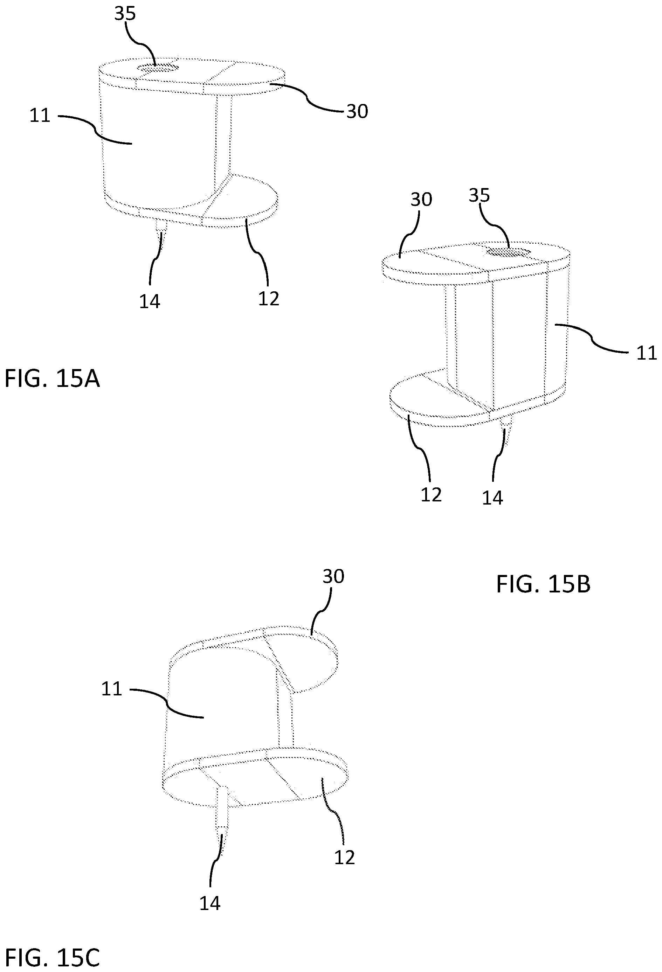

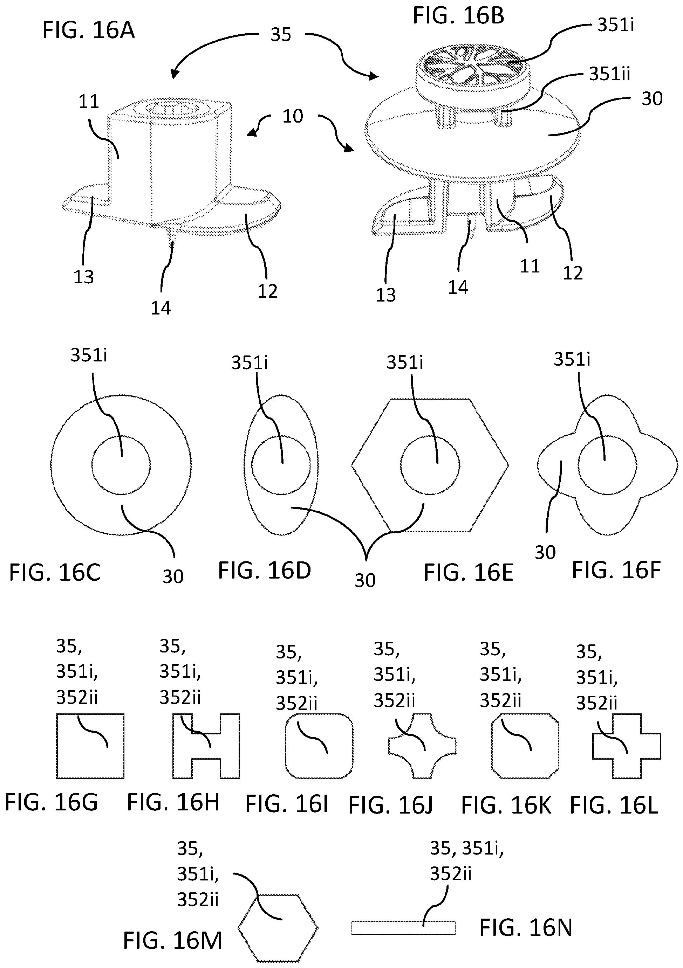

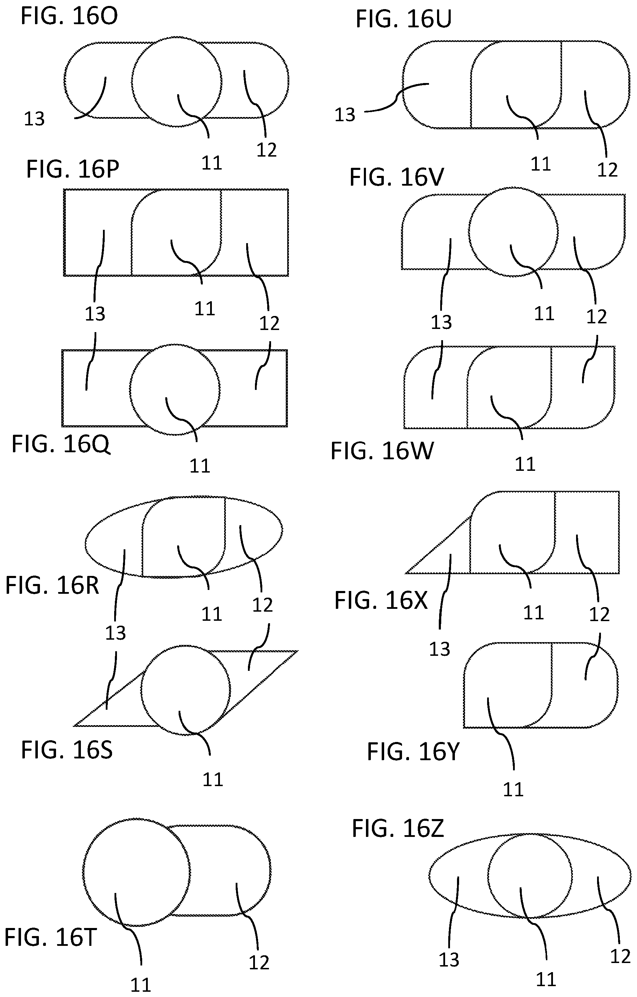

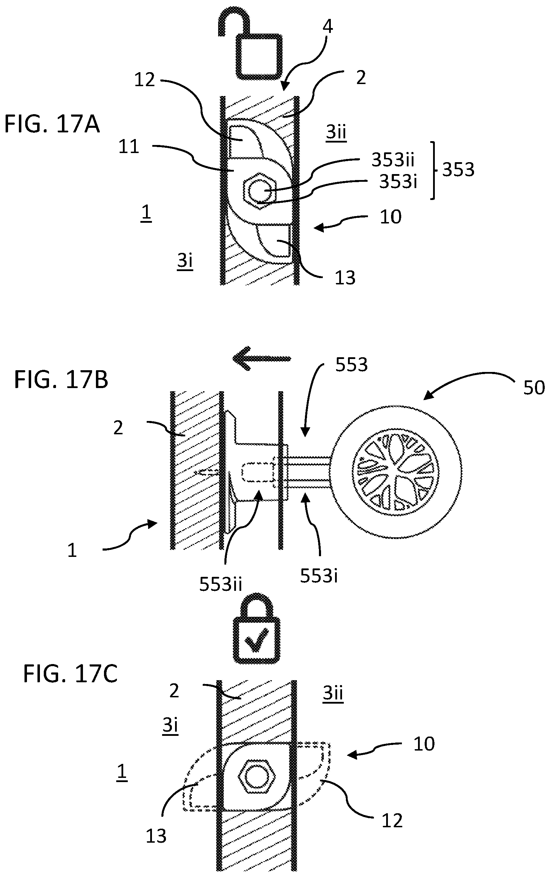

Fig. 1 shows embodiments of a set of parts according to aspect 1, and Fig. 2 shows other embodiments. Figs. 1 to 2 further show embodiments of a panel fitting according to aspects 2 to 6. Figs. 3 to 6 show embodiments of a panel fitting according to any one of the aspects 1 to 6. Figs 7A to 7D show an embodiment of an installation tool according to aspect 5 from different angles. Fig. 8 shows a set of parts according to aspect 1 with panel fittings in different degrees of attachment to a slat wall panel. Fig. 8 further shows a set of parts according to aspect 5. Fig. 8 further shows a panel fitting according to any one of aspects 1 to 6 and use of a panel fitting according to any one of aspects 3 and 4. Fig. 9 shows an alternative embodiment of a set of parts according to aspect 1. Figs. 10A to 10B show an embodiment of a panel fitting according to any one of aspects 1 and 2. Fig. 11 shows an embodiment of a panel fitting for a set of parts according to aspect 1. 12A to 12B show embodiments of a panel fitting according to aspect 3 to 4. Fig. 12A further shows a panel fitting for a set of parts according to aspect 1. Fig. 12B shows a set of parts according to aspect 1. Fig. 13A shows an alternative embodiment of a panel fitting for a set of parts according to aspect 1 and Fig. 13B shows a set of parts according to aspect 1. Figs. 14A and 14B show an alternative embodiment of a panel fitting according to any one of aspects 1 to 6. Fig. 14C shows a further alternative embodiment of a panel fitting according to any one of aspects 1 to 6. Figs. 15A to 15B show another alternative embodiment of a panel fitting according to any one of aspects 1 to 6. Fig. 16A shows an alternative embodiment of a panel fitting according to any one of aspects 1 to 6. Fig. 16B shows an alternative embodiment of a panel fitting according to any one of aspects 1 to 6. Figs. 16C to 16F show alternative embodiments of a retainment element for a panel fitting according to any one of aspects 1 to 6. Figs. 16G to 16N show alternative embodiments of an accessory and/or attachment element according to any one of aspects 1 to 6. Figs. 16O to 16Z show alternative embodiments of attachment wings according to any one of aspects 1 to 6. Figs. 17A to 17C show a set of parts according to aspect 1. Fig. 17B shows a set of parts according to aspect 1 and 2.

### Description of Embodiments

Referring initially to Figs. 1A-1C, a side view of an embodiment of a slat wall panel 1 and a panel fitting 10 for mounting an accessory (not shown) on the slat wall panel 1, according to aspect 1 is shown. The slat wall panel 1 is mounted on a surface of a building 200 as shown in Fig. 1A. In Fig. 1A, the panel fitting 10 is not attached to the slat wall panel 1 but is shown as a separate part to be inserted between a first slat 3i and second slat 3ii of the slat wall panel 1. The first and second slats 3i, 3ii are arranged on a front surface 21 of a support plate 2, in parallel to each other, and are arranged at a mutual distance along a width W to form an oblong spacing 4 between the slats 3i, 3ii, thereby leaving a part of a support plate exposed. The slat wall panel 1 may, however, comprise more slats. In Figs. 1A to 1C the panel fitting 10 is shown with an attachment element 35 for connection to the accessory (not shown).

In Fig. 1A the panel fitting 10 is shown with a penetration device 14 in form of a pin at an end of a stem 11 and two attachment wings 12, 13 for attaching the panel fitting 10 to the slat wall panel 1. In this embodiment the attachment wings are protruding from an end of the stem 11.

The oblong spacing 4 has a depth in a depth direction D. The stem 11 has a stem length or stem height H in the depth direction D when the panel fitting is inserted in the slat wall panel 1. The oblong spacing 4 has a width W in a width direction W. Both the slats and the oblong spacing extend in a longitudinal direction L, which is perpendicular to the width direction W and the depth direction D i.e. extending into the plane of the drawing of Fig. 1A.

Each slat has a slat back 31 abutting the support plate 2, a slat front 32 and two slat sides 33, 34. A slat thickness or slat depth is the distance between the slat back 31 and slat front 32.

In Fig 1B, the panel fitting 10 of Fig. 1A is inserted in the opening 4 of the slat wall panel 1 where the penetration device 14 penetrates the support plate 2 as indicated by the dashed lines but does not penetrate through the support plate. When the panel fitting 10 is inserted between the slats 3i, 3ii the stem 11 extends beyond the slat front 32 in the height direction H. The panel fitting 10 is adapted to be rotated around a centre axis extending through the penetration device 14, such that each attachment wing 12, 13 is guided and engages with a track 20i, 20ii formed between a slat 3i, 3ii and the support plate 2.

In Figs. 1A to 1C, the attachment wings 12, 13 are connected to and protrudes laterally from the stem 11 of the panel fitting 10, as best seen in Fig. 1C where the panel fitting 10 from Figs. 1A and 1B has been rotated and the tracks 20i, 20ii between the slats 3i, 3ii and the support plate 2 have been formed. With the attachment wings 12, 13 arranged behind the slats 3i, 3ii, the slat front 32 extends beyond the stem in the height direction H and the penetration device still does not penetrate through the support plate.

The combined effect of the pin 14 and the attachment wings 12, 13 limits translational movement of the panel fitting 10 in all directions when attached to the slat wall panel 1. Thereby, as the panel fitting may only be moved by a rotational movement, a secure attachment of the panel fitting 10 to the slat wall panel 1 is obtained. In set of parts comprising a panel fitting and a slat wall panel, the panel fitting may have only at least one attachment wing 12 for attaching to the slat wall panel. This provides a simpler design. Such a panel fitting is shown in Figs. 14 to 15.

To form the tracks 20i, 20ii, the support plate 2 is in these embodiments made from a compliant material that allows the attachment wings 12, 13 to compress and/or displace the material of the support plate 2 locally, when the panel fitting 10 is inserted and rotated between the slats 3i, 3ii. Thereby, the attachment wings 12, 13 can form the tracks 20i, 20ii in a non-destructive manner. The panel fitting 10 can be removed from the slat wall panel 1 again by rotating the panel fitting 10 such that the attachment wings 12, 13 leave the tracks 20i, 20ii, thereby leaving the slat wall panel 1 and panel fitting 10 intact. In the embodiments of 1A to 1C, the tracks 20i, 20ii are formed when inserting the panel fitting 10. In other embodiments, the tracks 20i, 20ii are formed in the slats as shown in Figs. 2A to 2C.

Turning first to Fig. 2A, a panel fitting 10 for being attached to a slat wall panel 1 is shown. All features of the slat wall panel as described in relation to Figs. 1A to 1C still apply but the tracks 20i, 20ii, are premade and are comprised in the first and second slats 3i, 3ii, such that the panel fitting 10 can be attached to the slat wall panel 1 non-destructively while allowing the support plate to be made from a non-compliant material. The panel fitting shown in Figs 2A to 2C corresponds to the panel fitting 10 shown in Figs. 1A to 1C with the only difference that the attachment wings 12, 13 extend substantially from the middle of the stem 11.

A single track 20i may be comprised in only one slat 3i allowing for the panel fitting 10 to have one attachment wing 12. In Figs. 2A-2C, the tracks 20i, 20ii are formed in the slat sides 33, 34 substantially in the middle between the slat front 32 and slat back 31.

The tracks 20i, 20ii may be located further towards the back surface 31 or the front surface 32 of the slats 3i, 3ii. In such embodiments, the attachment wings 12, 13 of the panel fitting 10 extend from the stem 11 correspondingly. These embodiments are especially advantageous in slat wall panels 1 designed for exterior walls where some compliant materials are not suitable for outside use.

In the presented embodiments, the support plate 2 has a plane surface abutting a plane back surface 31 of the slats 3i, 3ii.

Figs. 3A-3C show a magnified version of the panel fitting of Figs. 1A to 1C. In these embodiments, the panel fitting 10 comprises two attachment wings 12, 13 extending sidewards from the stem 11 in opposite directions, as best shown in the side view of the panel fitting in Fig 3B and the front view i.e. in parallel with the height direction H of the panel fitting in Fig. 3C. As can be seen in Fig. 3C, the attachment wings 12, 13 have a curved edge 121 and a straight edge 122. The curved edge 121 is bevelled to allow for easier rotation of the panel fitting 10 by reducing friction between the panel fitting 10 and the slat wall panel 1 during formation of the tracks 20i, 20ii. The panel fitting 10 further comprises a rotation block element 15, which will be described in detail in relation to other embodiments.

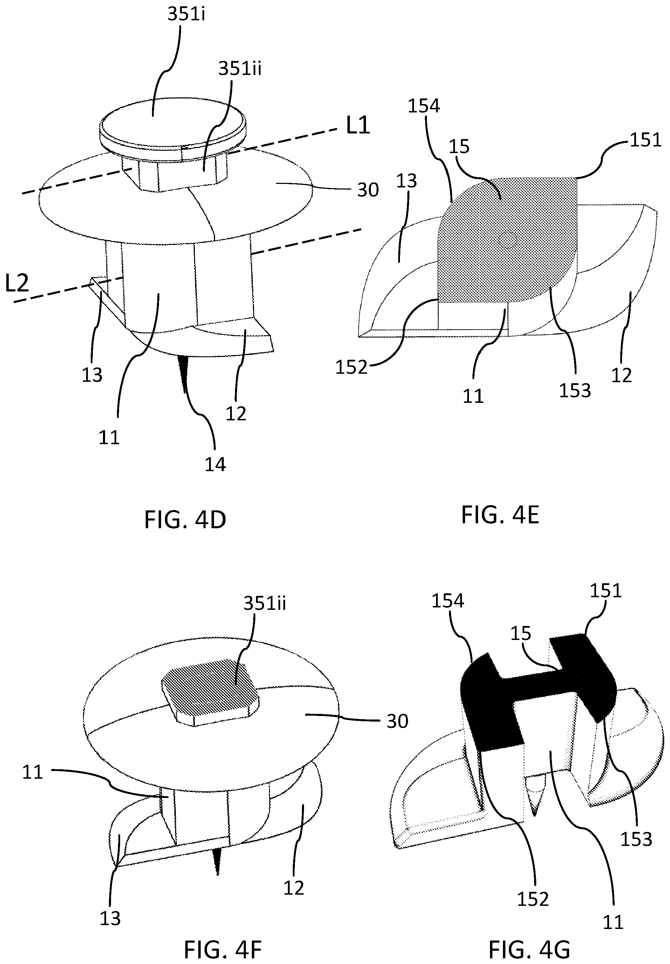

In Figs. 4A-4D, a panel fitting 10 is shown with a circular retainment element 30 which protrudes laterally from the stem 11. When the panel fitting 10 is attached to the slat wall panel 1, the slats 3i, 3ii are arranged between the retainment element 30 and the attachment wings 12, 13, as shown in Fig. 8. The retainment element 30 provides a more secure mounting of the panel fitting 10 to the slat wall panel 1 by limiting unintentional rotation of the panel fitting 10, such as rotation caused by the weight of the accessory. The retainment element 30 may also have other shapes and sizes, with some potential alternatives shown in Figs. 16C to 16F. The retainment element 30 can be integrated in the panel fitting 10 when manufactured, or it can be attached to the panel fitting 10 afterwards by means of a bolt and nut, as for example shown in Fig. 12A, or by glue. The panel fitting 10 shown in Figs. 4A to 4D further comprises the accessory 35 in the form of a knob 351. Figs. 4A to 4B show side views of the panel fitting 10 from different sides. The knob 351 is shown as extending in the height direction H from the stem 11. The knob 351 is integrally formed in the panel fitting 10. The knob 351 has a knob head 351i extending sidewards from an end of the knob 351. The knob head 351i is shown from a front view in Fig. 4C. The knob 351 also constitutes a connection element 351ii, which has a non-circular cross section in a plane perpendicular to the height direction H, as best shown in the perspective view in Fig. 4D. This allows a corresponding connection element 51i of an installation tool 50 to fit around the non-circular cross section. An embodiment of an installation tool 50 is shown in Figs. 7A to 7D.

Fig. 4E shows a cross section of the panel fitting 10 of Fig. 4D at L2, and Fig. 4F shows a cross section of the panel fitting 10 of Fig. 4D at L1.

Starting at Fig. 4E, the panel fitting 10 is shown having a stem 11 with a squared cross section with two opposite corners 153, 154 of the square being rounded, such that the panel fitting 10 can be inserted between the slats 3i, 3ii and rotated up to 90 degrees about a centre axis extending in the stem height direction H, such that the rounded corners 153, 154 pass side surfaces 33, 34 of the slats 3i, 3ii and sharp corners 151, 152 of the squared cross section inhibit further rotation. Thus, the shape of the squared cross section constitutes a rotation block element 15, that limits the risk of rotating the panel fitting 10 more than 90 degrees such as 180 degrees where the attachment wings 12, 13 are again free from the track 20i, 20ii. It also provides a natural stop of the rotation of the panel fitting 10 at 90 degrees where the attachment wings 12, 13 are optimally placed in the tracks 20i, 20ii to secure the panel fitting 10 in the slat wall panel 1. Fig. 4G shows a cross section of a panel fitting, wherein the stem 11 has a cross section with two rounded corners 153, 154 and two sharp corners 151, 152. In Fig. 4G further material of the square is removed providing a substantial H-shape while still providing the same function as the panel fitting shown in Fig. 4E. Such embodiments have the advantage of saving material and may be optimized for manufacturing by injection moulding.

Turning to Fig. 4F, a cross section of attachment element 351ii of the knob 351 is shown with a squared cross section.

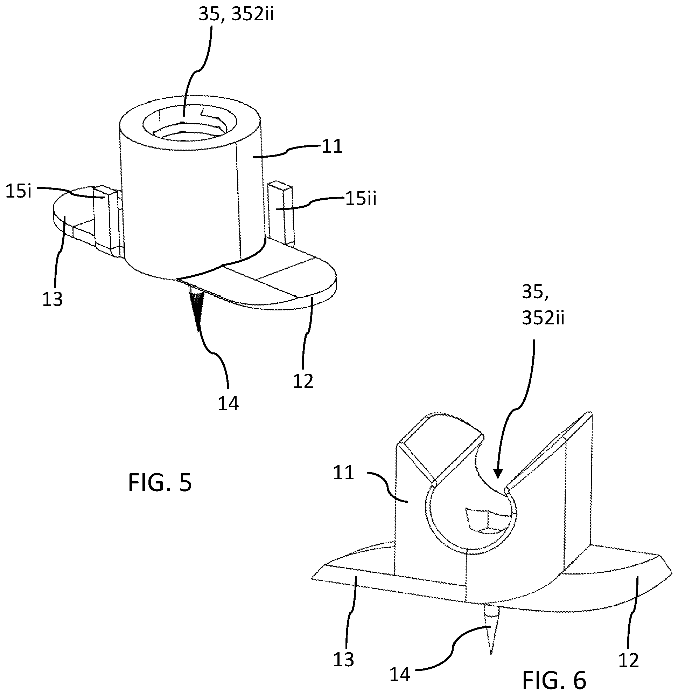

In Fig. 5, the attachment element 35 is a screw hole 352ii. In this embodiment, the attachment element 35 constitutes a connection element 352ii. The connection element 352ii may match with a second connection element 51ii of an installation tool 51, as shown in Fig. 7A.

Returning to Fig. 5, the stem 11 has a circular cross section. A rotation block element 15i, 15ii extends from each of the attachment wings 12 and 13 in parallel with the stem 11 to prevent unintended rotation. In Fig. 5 the attachment wings 12, 13 have rounded corners, however other shapes such squared, or a straight edge combined with a curved edge may be envisioned, with some alternative embodiments shown in Figs. 16O to 16Z.

In Fig. 6, the attachment element 35 comprises two flanges extending in parallel for receiving a cable. The flanges are fitted for receiving an accessory, such as a cable or wire to an electronic device, such as a lamp, a TV, a loudspeaker, stereo or the like. The accessory can be installed in the oblong openings of the slat wall panel 1 while being substantially flush with the slat front. The attachment element 35 of the panel fitting 10 also comprises a connection element 352ii that matches a corresponding connection element 51ii of an installation tool shown in Figs. 7A to 7D.

Figs. 7A to 7D show an installation tool 50 according to aspect 5. The installation tool 50 has a first connection element 51i of the installation tool 50 adapted to match the connection element 351ii of a panel fitting 10 as shown in Figs. 4A-4F. Additionally, the installation tool 50 is shown having a second connection element 51ii matching a second connection element 352ii of another panel fitting 10, such as a panel fitting 10 as shown in Figs. 5 and 6. The first connection element 351ii and the second connection element 352ii of the associated first and second panel fittings 10 are different from each other, and the corresponding first and second connection elements 51i, 51ii of the installation tool 50 are different from each other. The first connection element 51i of the installation tool 50 is comprised in the installation tool 50 and is adapted to grip around a knob 351 according to the embodiment of Figs. 4A-4F. The second connection element 51ii of the installation tool 50 is a hex screw or key and matches the connection element 352ii of a panel fitting 10 as shown in Figs. 5 and 6. The installation tool 50 can provide a better grip on the panel fittings when attaching them to the slat wall panel 1. The installation tool may comprise further connection elements for matching with corresponding connection elements on other panel fittings, such as a third connection element of the installation tool matching a corresponding third connection element of a third panel fitting. The first connection element 51i of the installation tool 50 is comprised in an elongated body 52 of the installation tool 50 and the second connection element 51ii extends sidewards from the elongated body 52.

In Fig. 8, the installation tool 50 is shown together with the panel fitting 10 of Figs. 4A-F. Connection of the first connection element 351ii, in form of the knob 351 of the panel fittings 10 to the corresponding connection elements 51ii of the installation tool 50 rotationally fixates the installation tool 50 to the connection element 351ii. The connection element 51ii of the installation tool 50 is adapted to slide onto the knob 351 and receive the knob head 351i, such that the panel fitting 10 and installation tool 50 are locked to each other in the height direction H of the stem 11 of the panel fitting i.e. along the centre axis. The panel fitting 10 is attached to the slat wall panel 1 by inserting the panel fitting 10 in between first and second slats 3i, 3ii of the slat wall panel 1, and, then, using the installation tool 50 to rotate the panel fitting 10, such that the attachment wings 12, 13 engage with the track 20i, 20ii of the slat wall panel 1. During removal of the panel fitting 10, the corresponding connection element 51ii of the installation tool is slid onto the knob 35ii, the installation tool 50 is rotated, and the panel fitting 10 can be removed from the slat wall panel 1 by pulling the installation tool 50. The slats 3 are shown as being fastened to the support plate 2 by means of staples 7.

In Fig. 9, the slats 3i, 3ii are shown with slat sides extending from the slat front 32 at an acute angle 5 thereby giving the slats a trapezoid cross section. The track 20i, 20ii is formed in the triangular space 4i between the slats 3i, 3ii and support plate 2. A panel fitting with the attachment wings 12, 13 having a profile matching the triangular track giving the panel fitting a conical profile is shown as attached to the slat wall panel. The panel fitting of Fig. 9 is also shown in Figs. 10A to 10B where the attachment wings 12, 13 have a thickness corresponding substantially to the height of the stem 11.

Turning to Fig. 12A, an alternative embodiment of the panel fitting 10 comprising a bending part 46 is shown. In this embodiment, the stem is substantially U-shaped with two legs 41, 42 of the U-form extending from a bottom section 46. In this embodiment, the attachment element 35 comprises the bending part 46 and the attachment wings 12, 13 are bent towards each other by bending the bottom section 46 of the U-shape, thereby decreasing the width w of the panel fitting, as indicated by the dotted lines. In Fig. 12A, the attachment element 35 and attachment wings 12, 13 are integrally formed, and the retainment element 30 is shown as two pieces separate from the stem 11. Fig. 12B shows the panel fitting from Fig. 12A in the slat wall panel with the bottom section of the U-shaped stem being substantially parallel with the bottom plate 2. Bending the attachment element 35 decreases the width w to allow insertion of the panel fitting in the oblong opening.

Turning to Fig. 13A, an alternative panel fitting 10 comprising a U-shaped stem 11 and a bending part 46 is shown. In this embodiment, the stem 11 comprises the bending part and the attachment wings 13, 12 are bent towards each other thereby decreasing the width w of the panel fitting. In Fig. 13A, the attachment element 35 is formed separately from the attachment wing and is inserted in the slat wall panel after the bend part has returned to an unbent state. This provides stability of the panel fitting 10 when attached to the slat wall panel. Fig. 13B shows the panel fitting from Fig. 13A in the slat wall panel. Bending of the stem 11 decreases the width W to allow insertion of the panel fitting in the oblong opening. Fig. 13B shows the panel fitting from Fig. 13A attached to the slat wall panel 1 with the bottom section of the U-shape stem being perpendicular to the bottom plate 2.

Figs 14A to 14C show modified embodiments of the panel fitting 10 of Fig. 3A where only differences from the embodiment of Fig. 3A will be described in the following. Figs. 14A and 14B show an embodiment of the panel fitting 10 with one attachment wing 12 protruding from one end of the stem 11. Figs. 14A and 14B further shows the retainment element 30 protruding only in an opposite direction from the stem 11 compared to the attachment wing 12.

Figs 14A and 14B show an embodiment where the attachment wing 12 can be rotated either clockwise or counter-clockwise to guide the attachment wing such that the attachment wing engages with the track of the slat wall panel because the stem 11 has a circular cross section and the panel fitting does not comprise a rotation block element.

Fig. 14C shows an alternative embodiment of the panel fitting 10 comprising an alternative rotation block element 15, thus being able to rotate clockwise to guide the attachment wing 12 such that the attachment wing 12 may engage with the track and counter-clockwise to disengage with the track.

Figs 15A-15C show embodiments of the panel fitting 10 with the attachment wing 12 and the retainment element 30 extending in the same direction from the stem 11.

Fig. 16A shows a preferred embodiment of the panel fitting 10 with attachment wings 12 and 13 extending sidewards from an end of the stem 11 and an attachment element 35 in form of a hole. Fig. 16B shows another preferred embodiment of the panel fitting 10 comprising the accessory 35 in form of a knob like element 351i, 351ii and a retainment element 30.

Figs 16C-16F show different alternatives of cross-sectional areas of the retainment element 30, the cross section being taken in a plane perpendicular to the stem height direction.

Figs. 16G-16N show different alternatives of cross-sectional areas of the attachment element 35, such as a cross-sectional area of the knob head 351i and the connection element 351ii in a plane perpendicular to the stem height direction. These embodiments both represent alternative cross-sectional areas of an indentation and protrusion according to aspect 1.

Figs. 16O to 16Z show different alternatives of shapes of the attachment wings 12, 13 according to aspect 1.

Figs 17A is a front view of the panel fitting 10 from Fig. 16A inserted between two slats 3i, 3ii, of the slat wall panel 1. The panel fitting 10 is unattached to the slat wall panel 1, as indicated by the open lock.

The panel fitting comprises an attachment element 35 in form of a hole 353.

The hole has a top part 353i with a polygonal circumference adapted to engage with a hex-key and a bottom part 353ii with a circular circumference.

Fig. 17B shows the panel fitting from Fig. 17A from a side view together with an alternative embodiment of the installation tool 50 configured to engage with the panel fitting 10. The installation tool 50 comprises an elongated member 553, with a first part 553i engaging with the top part of the hole 353i, and a second part 553ii engaging with the bottom part of the hole 353ii.

The hole of the panel fitting forms a connection element of the panel fitting, and the elongated member 553 form a connection element of the installation tool.

Fig. 17C shows the panel fitting from Figs. 17A and 17B from a front view now in engagement with the slat wall panel 1, as indicated by the lock.

Figs. 17A to 17C show one possible use of a panel fitting 10 according to any of the third aspect and fourth aspect. Figs. 17A to 17C further shows a set of parts according to the first aspect and Fig. 17B shows a set of parts according to the second aspect.

## Claims

1. A set of parts for mounting an accessory on a slat wall panel (1) for being mounted on a surface of a building, wherein the set of parts comprises the slat wall panel (1) and a panel fitting (10) for being attached to the slat wall panel (1),
wherein the slat wall panel (1) comprises at least a first and a second slat (3i, 3ii) connected to a support plate (2), and
the panel fitting (10) comprising the accessory and/or an attachment element (35) for connection to the accessory,
wherein the panel fitting (10) is adapted to be attached to the slat wall panel (1) by inserting the panel fitting (10) in between the first and second slats (3i, 3ii) of the slat wall panel (1),
the panel fitting (10) further comprising two attachment wings (12, 13), so that the panel fitting (10) can be attached to the slat wall panel (1) by inserting the panel fitting (10) in between the first and second slats (3i, 3ii) and, then, guiding the attachment wings (12, 13) such that each attachment wing (12, 13) engages with a track (20i, 20ii) of the slat wall panel (1), wherein the track (20i, 20ii) is formed between the support plate (2) and one of the first and second slats (3i, 3ii),
**characterised in that**
the slats (3i, 3ii) are arranged on a front surface of the support plate (2), and the track (20i, 20ii) is formed when the attachment wing (12, 13) is introduced between the support plate (2) and the slat (3i, 3ii).

2. A set of parts according to claim 1, wherein the support plate (2) of the slat wall panel (1) is made of a compressible material, such as a felt material or a soft wood material, in which each attachment wing (12, 13) non-destructively forms the track (20i, 20ii).

3. A set of parts according to claim 1 or 2, wherein the set of parts further comprises the accessory.

4. A set of parts according to any one of the preceding claims, wherein the attachment wings (12, 13) are guided by rotating the part of the panel fitting comprising the attachment wings (12, 13).

5. A set of parts according to any one of the preceding claims, wherein a slat back of each slat is partly fastened to the support plate leaving the slat back partly free from the support plate.

6. A set of parts according to any one of the preceding claims, wherein the two attachment wings extend laterally from an end of a stem (11).

7. A set of parts according to any one of the preceding claims, wherein the panel fitting further comprises a penetration device (14), such as a pin or needle, configured for penetrating the support plate when the panel fitting is inserted between the first and second slats (3i, 3ii).

8. A set of parts according to any one of the preceding claims, wherein
the panel fitting (10) comprises the attachment element (35) for connection to the accessory,
the attachment element (35) comprises a non-circular hole, depression or spacing, such as a hole for receicing a hex key, Philips, torx, or hexagonal screwdriver head,
the attachment element (35) comprises a threaded hole for receiving a screw, and
the panel fitting (10) comprises at least one rotation block element (15, 15i, 15ii).

9. Use of a set of parts according to any one of the preceding claims.

## Patentansprüche

1. Bauteilesatz zum Montieren eines Zubehörs an einer Lamellenwandplatte (1) zum Montieren an einer Gebäudefläche, wobei der Bauteilesatz die Lamellenwandplatte (1) und einen Plattenbeschlag (10) zum Anbringen an der Lamellenwandplatte (1) umfasst,
wobei die Lamellenwandplatte (1) mindestens eine erste und eine zweite Lamelle (3i, 3ii) umfasst, die mit einer Stützplatte (2) verbunden sind, und
wobei der Plattenbeschlag (10) das Zubehör und/oder ein Befestigungselement (35) zum Verbinden mit dem Zubehör umfasst,
wobei der Plattenbeschlag (10) dazu eingerichtet ist, durch Einsetzen des Plattenbeschlags (10) zwischen die erste und zweite Lamelle (3i, 3ii) der Lamellenwandplatte (1) an der Lamellenwandplatte (1) angebracht zu werden, wobei der Plattenbeschlag (10) ferner zwei Befestigungsflügel (12, 13) umfasst, so dass der Plattenbeschlag (10) durch Einsetzen des Plattenbeschlags (10) zwischen die erste und zweite Lamelle (3i, 3ii) an der Lamellenwandplatte (1) befestigt werden kann, und anschließend die Befestigungsflügel (12, 13) so geführt werden, dass jeder Befestigungsflügel (12, 13) mit einer Bahn (20i, 20ii) der Lamellenwandplatte (1) in Eingriff steht, wobei die Bahn (20i, 20ii) zwischen der Stützplatte (2) und einer der ersten und zweiten Lamelle (3i, 3ii) gebildet ist,
**dadurch gekennzeichnet, dass**
die Lamellen (3i, 3ii)) auf einer Stirnfläche der Stützplatte (2) angeordnet sind, und die Bahn (20i, 20ii) gebildet wird, wenn der Befestigungsflügel (12, 13) zwischen der Stützplatte (2) und der Lamelle (3i, 3ii) eingesetzt wird.

2. Bauteilesatz nach Anspruch 1, wobei die Stützplatte (2) der Lamellenwandplatte (1) aus einem kompressiblen Material, wie etwa einem Filzmaterial oder einem Weichholzmaterial, hergestellt ist, wobei jeder Befestigungsflügel (12, 13) zerstörungsfrei die Bahn (20i, 20ii) bildet.

3. Bauteilesatz nach Anspruch 1 oder 2, wobei der Bauteilesatz ferner das Zubehör umfasst.

4. Bauteilesatz nach einem der vorhergehenden Ansprüche, wobei die Befestigungsflügel (12, 13) durch Drehen des Teils des Plattenbeschlags, der die Befestigungsflügel (12, 13) umfasst, geführt werden.

5. Bauteilesatz nach einem der vorhergehenden Ansprüche, wobei der Lamellenrücken jeder Lamelle teilweise an der Stützplatte befestigt ist, wobei der Lamellenrücken teilweise frei von der Stützplatte bleibt.

6. Bauteilesatz nach einem der vorhergehenden Ansprüche, wobei sich die zwei Befestigungsflügel seitlich von einem Ende eines Schafts (11) erstrecken.

7. Bauteilesatz nach einem der vorhergehenden Ansprüche, wobei der Plattenbeschlag ferner eine Durchdringungsvorrichtung (14), wie etwa einen Stift oder eine Nadel, umfasst, die zum Durchdringen der Stützplatte ausgelegt ist, wenn der Plattenbeschlag zwischen die erste und zweite Leiste (3i, 3ii) eingesetzt wird.

8. Bauteilesatz nach einem der vorhergehenden Ansprüche, wobei
der Plattenbeschlag (10) das Befestigungselement (35) zur Verbindung mit dem Zubehör umfasst,
das Befestigungselement (35) eine/n nicht kreisförmige/n Bohrung, Vertiefung oder Abstand umfasst, wie etwa eine Bohrung zur Aufnahme eines Innensechskant-, Kreuzschlitz-, Torx- oder Sechskantschraubendreherkopfs, das Befestigungselement (35) eine Gewindebohrung zur Aufnahme einer Schraube umfasst und
der Plattenbeschlag (10) mindestens ein Drehblockelement (15, 15i, 15ii) umfasst.

9. Verwendung eines Bauteilesatzes nach einem der vorhergehenden Ansprüche.

## Revendications

1. Ensemble de pièces permettant de monter un accessoire sur un panneau de paroi à lattes (1) destiné à être monté sur une surface d'un bâtiment, l'ensemble de pièces comprenant le panneau de paroi à lattes (1) et un moyen de fixation de panneau (10) destiné à être fixé au panneau de paroi à lattes (1),
le panneau de paroi à lattes (1) comprenant au moins une première et une seconde latte (3i, 3ii) reliées à une plaque de support (2), et
le moyen de fixation de panneau (10) comprenant l'accessoire et/ou un élément de fixation (35) pour une liaison à l'accessoire,
le moyen de fixation de panneau (10) étant conçu pour être fixé au panneau de paroi à lattes (1) en insérant le moyen de fixation de panneau (10) entre les première et seconde lattes (3i, 3ii) du panneau de paroi à lattes (1),
le moyen de fixation de panneau (10) comprenant en outre deux ailes de fixation (12, 13), de sorte que le moyen de fixation de panneau (10) puisse être fixé au panneau de paroi à lattes (1) en insérant le moyen de fixation de panneau (10) entre les première et seconde lattes (3i, 3ii) puis en guidant les ailes de fixation (12, 13) de sorte que chaque aile de fixation (12, 13) vienne en prise avec une glissière (20i, 20ii) du panneau de paroi à lattes (1), la glissière (20i, 20ii) étant formée entre la plaque de support (2) et l'une des première et seconde lattes (3i, 3ii),
**caractérisé en ce que**
les lattes (3i, 3ii) sont disposées sur une surface avant de la plaque de support (2), et la glissière (20i, 20ii) est formée lorsque l'aile de fixation (12, 13) est introduite entre la plaque de support (2) et la latte (3i, 3ii).

2. Ensemble de pièces selon la revendication 1, la plaque de support (2) du panneau de paroi de latte (1) étant en un matériau compressible, tel qu'un matériau de feutre ou un matériau de bois tendre, chaque aile de fixation (12, 13) formant de manière non destructive la glissière (20i, 20ii).

3. Ensemble de pièces selon la revendication 1 ou 2, l'ensemble de pièces comprenant en outre l'accessoire.

4. Ensemble de pièces selon l'une quelconque des revendications précédentes, les ailes de fixation (12, 13) étant guidées par rotation de la partie du moyen de fixation de panneau comprenant les ailes de fixation (12, 13).

5. Ensemble de pièces selon l'une quelconque des revendications précédentes, un dos de latte de chaque latte étant partiellement fixé à la plaque de support laissant le dos de latte partiellement libre de la plaque de support.

6. Ensemble de pièces selon l'une quelconque des revendications précédentes, les deux ailes de fixation s'étendant latéralement à partir d'une extrémité d'une tige (11).

7. Ensemble de pièces selon l'une quelconque des revendications précédentes, le moyen de fixation de panneau comprenant en outre un dispositif de pénétration (14), tel qu'une broche ou une aiguille, conçu pour pénétrer dans la plaque de support lorsque le moyen de fixation de panneau est inséré entre les première et seconde lattes (3i, 3ii).

8. Ensemble de pièces selon l'une quelconque des revendications précédentes,
le moyen de fixation de panneau (10) comprenant l'élément de fixation (35) pour une liaison à l'accessoire,
l'élément de fixation (35) comprenant un trou non circulaire, une dépression ou un espacement, tel qu'un trou pour retirer une clé hexagonale, une tête de tournevis Philips, torx ou hexagonale,
l'élément de fixation (35) comprenant un trou fileté pour recevoir une vis, et
le moyen de fixation de panneau (10) comprenant au moins un élément de blocage de rotation (15, 15i, 15ii).

9. Utilisation d'un ensemble de pièces selon l'une quelconque des revendications précédentes.
